# EUROPÄISCHE PATENTSCHRIFT

(11) **EP 1 439 362 B1**
(45) Veröffentlichungstag und Bekanntmachung des Hinweises auf die Patenterteilung: **17.11.2010**
(21) Anmeldenummer: 03029274.2
(22) Anmeldetag: 22.12.2003
(51) Int. Cl.: F28D 20/00

(54) **Mehrkammerwärmespeicher**
Multichamber heat accumulator
Accumulateur de chaleur a chambres multiples

(30) Priorität: 20.01.2003 DE 10301807
(43) Veröffentlichungstag der Anmeldung: 21.07.2004
(73) Patentinhaber: Geotex Ingenieurgesellschaft für Strassen- und Tiefbau mbH, 81825 München (DE)
(72) Erfinder: Mohr, Peter, 81825 München (DE)
(74) Vertreter: Metten, Karl-Heinz

(56) Entgegenhaltungen:
- DE-A1- 4 341 858
- DE-A1- 19 929 692
- DE-A1- 19 945 053
- GB-A- 2 037 421
- GB-A- 2 070 762
- US-A- 4 139 056
- PATENT ABSTRACTS OF JAPAN Bd. 005, Nr. 112 (M-079), 21. Juli 1981 (1981-07-21) & JP 56 053392 A (TAIKISHA LTD), 12. Mai 1981 (1981-05-12)

## Beschreibung

Die vorliegende Erfindung betrifft einen Mehrkammerwärmespeicher gemäss dem Oberbegriff des Patentanspruchs 1. Die Erfindung betrifft ferner ein Verfahren gemäss Anspruch 33 zur Bewirtschaftung von Wärmespeicher sowie die Verwendung des erfindungsgemäßen Mehrkammerwärmespeichers zur Speicherung von Wärmeenergie aus Solaranlagen, Müllverbrennungsanlagen und Industrieanlagen. JP-A-56053392 beschreibt einen derartige Mehrkammerwärmespeicher.

Wärmespeicher sind in unterschiedlicher Ausgestaltung dem Fachmann bereits bekannt. Der Einsatz von Wärmespeichern bietet sich regelmäßig immer dann an, wenn thermische Energie in einer Menge vorhanden ist, die den aktuellen Bedarf übersteigt. Als saisonale Wärmespeicher kommen heutzutage erdgebundene Erdsonden- und Aquifer-Wärmespeicher sowie Wasser- und Kies/Wasser-Wärmespeicher zur Befriedigung eines angebotsunabhängigen Wärmebedarfs, beispielsweise für die Trinkwassererwärmung oder die Raumheizung, zum Einsatz.

In der DE-OS 24 39 028 wird z.B. ein Warmwasser-Wärmespeicher beschrieben, bei dem Wärmeverluste gegenüber herkömmlichen Großwärmespeichern dadurch vermieden werden sollen, daß man den Speichersee durch die Errichtung von Dämmen oder Sperrwänden in mehrere Zellen aufteilt, so daß die Zellen nacheinander bei der Ladung mit heißem, bei der Entladung mit kaltem Wasser, jeweils durch Verdrängung des einen durch das andere, befüllbar sind. Alternativ wird vorgeschlagen, den Speichersee über solche Sperrwände in mehrere Zellen zu unterteilen, die aus zwei im Abstand voneinander errichteten Einzelwänden bestehen, von denen die eine im Bereich der Sohle und die benachbarte Einzelwand im Bereich der Decke des Wärmespeichers über Durchlaßöffnungen verfügen. Auf diese Weise wird zunächst eine erste Zellen nahezu vollständig mit Wasser gefüllt, bevor dieses durch die beabstandeten Einzelwände hindurch in die benachbarte Zelle überfließen kann. Bei diesem Aufbau der Sperrwände erfolgt die Verdrängung des kalten bzw. des heißen Wassers bei der Ladung bzw. Entladung selbsttätig von Zelle zu Zelle, wobei sich jede Zelle bei der Ladung von oben nach unten mit heißem Wasser, bei der Entladung von unten nach oben mit kaltem Wasser vollständig füllt. Eine selektive Beladung einzelner Zellen ist mit einem solchen Aufbau allerdings nicht möglich. Zudem gestaltet sich die Entnahme geeigneter temperierter Wassermassen insbesondere bei großvolumigen Wärmespeichern sehr langwierig und kommt daher von vornherein nicht für sämtliche Anwendungen in Frage.

In der DE 199 45 053 A1 wird ein Wärmespeicher mit einem vorzugsweise in den Boden eingelassenen und vom umgebenen Boden abgetrennten Speicherbecken mit einer das Speichermedium umgebenden Wärmedämmung offenbart, wobei diese Wärmedämmung aus wärmeisolierendem Schüttgut besteht. Dabei kann vorgesehen sein, das als Speichermedium dienende Wasser mit mineralischen Füllstoffen wie Kies, Sand, Erdreich oder dergleichen zu versetzen, um den Wärmespeicher statisch zu sichern und um die über dem Wärmespeicher liegende Fläche nutzen zu können. Dem mineralischen Füllstoff wird jedoch gegenüber dem Speichermedium Wasser nur eine untergeordnete Wärmespeicherfunktion zugeschrieben. Vielmehr wird darauf hingewiesen, daß bei Verwendung einer wassertrennenden Folie ober- und unterhalb der das Speicherbecken abdeckenden Schüttgutisolierung auf eine Befüllung mit den oben genannten mineralischen Füllstoffen selbst dann verzichtet werden kann, wenn oberhalb des Speichers z.B. eine Bepflanzung vorgesehen ist.

Der DE 42 06 695 A1 ist ein überirdisch angebrachter Jahreszeiten-Wärmeenergiespeicher zu entnehmen, bei dem als Wärmespeichermedium Kies bzw. eine Mischung aus Erde und Kies und als Wärmetransportmedium Luft eingesetzt werden. Das Wärmespeichermedium wird durch eine aus Erde und Stroh bestehende Schicht thermisch isoliert. So wird beispielsweise mittels eines Kanals heiße Luft in das Innere des Wärmespeichers geleitet und von dort durch eine mehrere Meter dicke Kiesschicht geblasen, von wo sie über Rohre mit luftdurchlässiger Wandung wieder abgeführt wird. Auf diese Weise wird der Wärmespeicher von innen her aufgeheizt. Für die Energieentnahme wird kalte Luft beginnend von der Außenseite durch den Speicher hindurch gesaugt und aus der Mitte desselben entnommen. Der Wärmespeicher gemäß DE 42 06 695 A1 umfaßt im wesentlichen einen großen Erdhaufen, der von Kieskanälen durchzogen ist. Eine bedarfsgerechte und auf spezizifische Anwendungen zugeschnittene Energieentnahme ist mit einem solchen Wärmespeicher nicht möglich.

Die DE-OS 29 48 099 befaßt sich mit einem in das Erdreich eingelassenen Wärmespeicher, bei dem eine feste Wärmespeichermasse, z.B. Lehm, allseitig mit einer Isolierschicht aus mehreren getrennten Dämmplatten umgeben ist, wobei jede Dämmplatte aus einer Bahn aus Isoliermaterial besteht, welche vollkommen von einer Folienlage umschlossen ist. Mit dieser Konstruktion soll eine verbesserte Isolierung von mit Feststoffen gefüllten Wärmespeichern erreicht werden, die auch bei lokaler Beschädigung nicht nachhaltig in ihrer Wirkung reduziert wird.

Gemäß DE 199 29 692 A1 wird vorgeschlagen, für einen im Erdreich vorgesehenen Wärmespeicher den Bodenaushub als Speichermedium zu verwenden. Alternativ kann auch auf Blähton oder Granulat zurückgegriffen werden. Zwecks Isolierung der Speichergrube wird die Verwendung einer Folie oder sonstigen Dichtungsschicht sowie einer druckfesten Wärmedämmung offenbart. Für den Wärmeeintrag wird auf wärmetauschende Spiralleitungen, die im unteren bzw. oberen Bereich des Speicherbeckens vorgesehen sind, zurückgegriffen. Sofern neben dem festen Speichermedium auch ein flüssiger Wärmespeicheranteil vorliegt, kann gemäß DE 199 29 692 A1 auch dieser zum Wärmeaustausch eingesetzt werden.

Die DE 31 01 537 betrifft einen unterirdischen Wärmespeicher, bei dem das Wärmespeichermedium im wesentlichen aus einem Bindemittel wie Zement, Ton und Wasser besteht und wobei in diesem Material zumindest ein Teil eines Energietransportkreislaufs eingebettet ist. Das verwendete Wärmespeichermedium erstarrt erst langsam und ist über einen längeren Zeitraum zähflüssig und gestattet daher den nachträglichen Einbau eines Energietransportkreislaufes. Zudem kann es selbst in Erdgruben aus leichtem Bodenmaterial eingefüllt werden, ohne daß die Grubenwände unterspült werden oder einstürzen. Gleichwohl wird vorgeschlagen, an den Seitenwänden des Wasserspeichers Versteifungsorgane vorzusehen, die ein eventuelles Ausbrechen der Dämmschicht infolge des Gewichtes des Speichers oder des Erddruckes verhindern sollen.

In der DE 199 40 006 A1 wird ein im Erdreich vorliegender Wärmespeicher beschrieben mit einem Speichermedium, enthaltend in abwechselnder Folge Schichten aus wassertränkbarem und wasserdurchströmbarem Material, wobei die wasserdurchströmbaren Schichten hydraulisch miteinander verbunden sind. Die jeweiligen Schichten sind dabei in horizontaler Folge angeordnet. Als wasserdurchströmbares Material wird eine Schicht aus Kies und als Wärmespeichermedium eine Schicht aus Erdreich beschrieben. Mit der in der DE 199 49 906 A1 dargestellten Wärmespeichervorrichtung soll ein aufwendiges Rohrsystem zum Be- und Entladen des Speichers entfallen können.

Der unterirdische Wärmespeicher gemäß DE 43 41 858 A1 zeichnet sich dadurch aus, daß ein aus Erdreich bestehender Energiespeicher mit einer wärmeisolierenden Hülle aus mit Dichtstoff versehenem Lockergestein vorgesehen ist. Dabei wird über eine sich durch den oberen Hüllenabschnitt der Abdeckung erstreckende Energietransportvorrichtung dem Erdkörper Energie entnommen bzw. zugeführt. Als wärmeisoliert umschlossener Erdkörper kann ebenfalls Lockergestein eingesetzt werden, dessen freie Lücken und Porenräume darüber hinaus mit Wasser befüllbar sind. Wasser wird als Energieübertragungsmittel zentral in den wärmeisolierten Erdkörper eingebracht, um durch Wärmeübertragung denselben zu erwärmen. In gleicher Weise wird aufgewärmtes Wasser dem beschriebenen Wärmespeicher an zentraler Stelle wieder entnommen.

Die aus dem Stand der Technik bekannten Wärmespeicher auf der Basis von Wasser- oder Kies/Wasser-Speichern bilden regelmäßig wegen der Wärmeleitungs- und konvektiven Eigenschaften des flüssigen Mediums ein überwiegend vertikales Temperaturgefüge in einem mittleren Temperaturbereich aus. Dieses quasi-stationäre Temperaturgefälle wird bestimmt durch den Wärmeverlust über die Speicherwand sowie durch die Wärmeleitfähigkeit des Wärmeabsorbers. Dadurch stellen sich im wesentlichen homogene horizontale Temperaturbereiche, die übereinander geschichtet sind, ein. Insbesondere im ungesättigten Zustand des Wärmespeichers kann dann häufig die zuströmende Wärme nicht auf dem Temperaturniveau der Wärmequelle gespeichert werden. Hier wirkt sich als nachteilig aus, daß Ein-Kammer-Wasser- bzw. -Kies/Wasser-Wärmespeicher sehr träge reagieren, womit ein Entropieverlust gegenüber der Quelle einhergeht und die Vielfalt an Betriebsmöglichkeiten eingeschränkt wird. Von Nachteil ist ferner, daß sich Niedrigtemperaturwärme unterhalb der niedrigsten Speichertemperatur nicht einspeichern läßt.

Der vorliegenden Erfindung lag daher die Aufgabe zugrunde, Wärmespeicher zur Verfügung zu stellen, die nicht mit den Nachteilen des Standes der Technik behaftet sind und sich darüber hinaus auf einfache Weise an individuelle Gegebenheiten in Bezug auf Energieangebot und Energienachfrage einstellen lassen. Ferner sollen Wärmespeicher auf einfache und kostengünstige Weise zugänglich werden, die sich auch als Großwärmespeicher eignen, gleichzeitig jedoch nicht die für derartige Speicher üblicherweise hinzunehmende Trägheit bei der Energieeinspeisung bzw. -entladung aufweisen.

Demgemäß wurde ein Mehrkammerwärmespeicher gefunden, der sich dadurch auszeichnet, daß die Feststoffgrubenfiillung durch mindestens zwei Trennwände und/oder mindestens eine umlaufende Trennwand in Zonen unterteilt ist, und daß die Sohle mindestens eine thermische Dämmschicht und mindestens eine, insbesondere oberhalb der Dämmschicht angebrachte Abdichtschicht, insbesondere eine im wesentlichen wasserdichte, flexible Kunststoffdichtungsfolie, umfaßt und daß die umlaufende Seitenwand mindestens eine thermische Dämmschicht und/oder mindestens eine, insbesondere innenliegende, Abdichtschicht umfaßt, und daß die Abdeckung der Grubenstruktur mindestens eine thermische Dämmschicht und mindestens eine oberhalb der Dämmschicht vorliegende Abdichtschicht umfaßt, und wobei der Mehrkammerwärmespeicher mindestens ein in unterhalb oder benachbart zur der Abdeckung angebrachtes Einlass rohr enthaltend ein sprührohr oder mindestens eine Sprühdüse aufweist.

Die Grubenfüllung füllt im allgemeinen die Grubenstruktur vollständig aus, so daß die Abdeckung mit ihrer Unterseite auf der Grubenfüllung zur Auflage kommt. Demgemäß ist es regelmäßig nicht erforderlich, daß z.B. die Trennwände tragende Funktionen übernehmen müssen oder daß separate Stützstreben vorzusehen sind, die die Abdeckung stützen oder tragen. Die Grubenfüllung ist üblicherweise derart ausgestaltet, daß ein Wärmeübertragungsmedium, z.B. Wasser, ohne weiteres hindurch fließen und auf seinem Weg zu einem Abflußrohr Wärme an die Grubenfüllung abgeben oder von dieser aufnehmen kann. Selbst in einer die Grubenkonstruktion vollständig ausfüllenden Grubenfüllung verbleibt vorzugsweise ein Hohlraumvolumen von etwa 15 bis 30%. Die Grubenfüllung ist zweckmäßiger Weise gegen den unkontrollierten Austritt von Wärmeübertragungsmedium oder Wärme isoliert.

Demgemäß verfügt der erfindungsgemäße Mehrkammerwärmespeicher über eine im wesentlichen allseitig umlaufende thermische Dämmschicht und/oder eine im wesentlichen allseitig umlaufende Abdichtschicht. Hierfür können beispielsweise Kunststoffbahnen, wie sie aus dem Tunnelbau bekannt sind, eingesetzt werden. Bevorzugt wird auf thermoplastische, flexible Kunststoffolien, besonders bevorzugt auf Polyethylenfolien aus z.B. LD-PE, LLD-PE oder HD-Pe zurückgegriffen. Als besonders vorteilhaft hat sich der Einsatz einer biaxialen LD-PE-Folie erwiesen. Zur Erlangung einer verbesserten Dimensionsstabilität wird häufig auch auf solche flexiblen Polyolefinfolien, insbesondere mit teilkristalliner Struktur, zurückgegriffen, die gegebenenfalls auch über eine Glasvliesarmierung verfügen. Diese Armierung kann z.B. die innenliegende Schicht einer coextrudierten Folie sein. Geeignete Abdichtbahnen sind z.B. über die Sarnafil GmbH, Feldkirchen, unter den Bezeichnungen MP 970, MP G 950, MC G 770 zu beziehen. Grundsätzlich kann auch für die Abdichtschicht auf Lkw-Folien zurückgegriffen werden. Besonders bevorzugt wird ebenfalls auf eine Abdichtschicht und/oder Trennwand, z.B. in Form einer oder umfassend eine Kunststoffbahn, enthaltend Polyestermaterialien, zurückgegriffen. Besonders bevorzugt sind temperaturbeständige, insbesondere hochtemperaturbeständige Polyesterfolien, beispielsweise solche mit einem Schmelzpunkt von etwa 200 °C, vorzugsweise etwa 250 °C, oder darüber. Des weiteren sind als temperaturbeständige Folien solche, basierend auf Polyurethanen geeignet, beispielsweise Glasvliese, die mit einem Polyurethanschaum besprüht bzw. ummantelt sind. Ferner kann auf Folien aus bzw. enthaltend syndiotaktisches Polystyrol, Polyamide oder Polyethylenterephthalat zurückgegriffen werden. Grundsätzlich eignen sich hochtemperaturbeständige Kunststofffolien für den Betrieb des erfindungsgemäßen Mehrkammerwärmespeichers insbesondere auch dann, wenn das gespeicherte Medium, zumeist Wasser, Temperaturen oberhalb von 100 °C aufweist. Dieses kann z.B. dann der Fall sein, wenn auf die Flüssigkeit des Mehrkammerwärmespeichers ein Druck wirkt. Im Allgemeinen reicht es bereits aus, wenn die Kunststoffbahnen, insbesondere die hochtemperaturbeständigen Kunststoffbahnen, Dicken im Bereich von etwa 2 mm aufweisen.

Dabei kann vorgesehen sein, daß die thermische Dämmschicht der Seitenwand und/oder Abdeckung mindestens eine Lage aus, insbesondere benachbarten, geschäumten Körpern, insbesondere großformatigen und/oder geschlossenporigen, Hartschaumstoffblöcken, enthaltend expandiertes Polystyrol, umfaßt.

Ferner kann vorgesehen sein, daß die thermische Dämmschicht der Sohle mindestens eine Lage aus, insbesondere benachbarten, geschäumten Körpern, insbesondere großformatigen und/oder geschlossen porigen Hartschaumstoffblöcken, und/oder mindestens eine Schicht aus mineralischen Dämmstoffen, insbesondere geschäumtem Glas, Blähton und/oder Blähschiefer, umfaßt.

Zur Wärmedämmung werden bevorzugt Blöcke aus extrudiertem, geschlossenporigem Polystyrolhartschaum (EPS) eingesetzt, wie sie beispielsweise beim Bau von Verkehrsdämmen auf weichem Untergrund bekannt sind. Für die Wärmedämmung der Sohl- und Seitenwandungsflächen sind geschäumte Körper mit einer Rohdichte von etwa 20 bis 30 kg/m³ und für die Dämmschicht der Abdeckung solche mit Rohdichten von etwa 10 bis 20 kg/m³ geeignet. Die Druckfestigkeit dieser Dämmwerkstoffe ist im allgemeinen für Bauhöhen von Erdwannenspeichern bis zu ca. 8 m ohne weiteres ausreichend. Bei größeren Bauhöhen empfiehlt es sich, insbesondere in der Sohle mineralische Dämmschichten, z.B. Blähton, Schaumglas, Kies oder Schlacken, insbesondere Elektroofenschlacken, zu verwenden. Sofern als gekörntes Speichermaterial Schlacke, insbesondere Elektroofenschlacke, zum Einsatz kommt, ist deren beispielsweise gegenüber Kies wesentlich höhere Dichte bei der Festlegung der Bauhöhe der erfindungsgemäßen Mehrkammerwärmespeicher zu berücksichtigen. Demgemäß hat es sich als pragmatisch erwiesen, insbesondere bei Verwendung von Isoliermaterial auf der Basis von EPS, bei einer Befüllung eines Wärmespeichers mit (Elektroofen)Schlacke eine diesbezügliche Füllhöhe von etwa 4 bis 5 m nicht zu überschreiten. (Elektroofen)Schlacke ist als Grubenfiillmaterial gleichwohl aufgrund seiner sehr hohen Wärmekapazität besonders geeignet.

Insbesondere bei Verwendung einer temperaturbeständigen, insbesondere hochtemperaturbeständigen Abdichtschicht, z.B. in Form von Kunststoffbahnen, greift man auf mineralische Dämmmaterialien bzw. -schichten, z.B. aus Blähton, Blähschiefer oder Schaumglas, zurück. Diese mineralischen Dämmmaterialien sind im Allgemeinen auch bei erhöhten Betriebstemperaturen des Wärmespeichers temperaturbeständig.

Gemäß einer erfindungsgemäßen Ausgestaltung ist vorgesehen, daß die Grubenfüllung mehrere nebeneinander angeordnete, insbesondere im wesentlichen parallel verlaufende, und/oder sich kreuzende und/oder ein oder mehrere umlaufende, insbesondere zentrisch angebrachte, Trennwände aufweist. Indem man Trennwände in die Grubenfüllung einzieht, erhält man segmentierte Wärmespeicher mit gegenseitig wärmegedämmten Speicherzellen, wodurch sich der Entropieverlust durch gezielte Einspeisung und Entnahme von Wasser auf den unterschiedlichen Temperaturen der Speichersegmente minimieren läßt. Sind die durch die Trennwände separierten Speicherzonen beispielsweise flüssigkeitsleer, ist außerdem die Wärmeleitung zu den umgebenden Zonen nochmals reduziert. Auf diese Weise verfügt der erfindungsgemäße segmentierte Wärmespeicher auch über eine gute Langzeitspeicherfähigkeit. Der erfindungsgemäße Wärmespeicher besitzt vorzugsweise weitgehend isoterme Temperaturzonen. Zudem ist es bautechnisch bei den erfindungsgemäßen Wärmespeichern ohne weiteres möglich, unterschiedlich wärmeleitfähige Wärmedämmungen für die Trennwände, beispielsweise mittels Materialvariation und/oder durch unterschiedliche Dämmstoffdicken, insbesondere auch an unterschiedlichen Ortsbereichen oder Tiefen der Grubenfiillung, zu nehmen. Auf diese Weise kann auch tiefenabhängigen Druckbelastungsanforderungen ohne weiteres Rechnung getragen werden. Des weiteren kann der erfindungsgemäße Wärmespeicher in eine Vielzahl von einander getrennten Zonen mit Speichervolumina von wenigen hundert bis zu tausenden von m³ an Grubenfüllung unterteilt werden.

Eine bevorzugte Ausführungsform der Erfindung zeichnet sich dadurch aus, daß die Trennwand bzw. Trennwände geneigt und/oder zumindest abschnittsweise im wesentlichen vertikal ausgerichtet sind und sich im wesentlichen von der Abdeckung, insbesondere unter Ausbildung einer im wesentlichen fluiddichten Anbindung an diese, bis zur Sohle erstrecken.

Gemäß einer weiteren Ausführungsform ist vorgesehen, daß die Trennwand, insbesondere im Bereich der Sohle, mindestens eine Durchlaßöffnung aufweist.

Insbesondere bei einer geneigt ausgebildeten Sohle, z.B. mit einer Senke im Zentrum der Grubenstruktur, hat es sich als zweckmäßig erwiesen, die Trennwände im unteren Bereich mit einer Aussparung zu versehen, damit ein von oben in die jeweilige Zone eingespeistes Wärmeübertragungsmedium einem vorzugsweise in der Senke angeordneten Abflußrohr zugeführt werden kann. Auf diese Weise wird der Kontakt zwischen den einzelnen Zonen auf ein geringstmögliches Maß reduziert. Selbstverständlich können auch Vorkehrungen getroffen werden, damit das Wärmeübertragungsmedium im unteren Bereich einer benachbarten Zone nicht in Kontakt kommt, z.B. durch Verwendung von geeigneten Schichten.

In einer weiteren vorteilhaften Ausgestaltung der Erfindung kann dagegen vorgesehen sein, daß mindestens eine Trennwand und/oder eine, insbesondere zur Trennwand benachbarte, Abdichtschicht zumindest bereichsweise mit der Sohle, insbesondere fluiddicht, unter Ausbildung abgeschlossener Zonen verbunden ist.

Erfindungsgemäße Mehrkammerwärmespeicher zeichnen sich dabei insbesondere dadurch aus, daß mindestens eine Trennwand und/oder eine, insbesondere zur Trennwand benachbarte Abdichtschicht die Grubenstruktur in fluiddichte und/oder thermisch isolierte Zonen aufteilt, zwischen denen im wesentlichen kein freier Austausch an Fluid und/oder Wärmeenergie stattfindet. Beispielsweise läßt sich durch Anbringung einer umlaufenden, mit der Sohlabdichtung verschweißten vertikalen Abdichtungsschicht thermisch eine Kernzone gegenüber Randzonen abdichten und abgrenzen. Die Bewirtschaftung solcher fluiddicht abgegrenzter Zonen erfolgt hierbei unabhängig voneinander, so daß jede dieser Zonen über jeweils mindestens einen Ein- und einen Auslaß verfügt.

Geeignete Mehrkammerwärmespeicher sind zweckmäßiger Weise derart ausgestaltet, daß die Trennwand eine Wand aus Stein, Beton, Metall und/oder Kunststoff, insbesondere einem druckfesten und/oder hochtemperaturbeständigen Kunststoff und/oder eine Kunststoffolie, umfaßt. Besonders bevorzugt wird auf Trennwände aus z.B. zweilagigen Kunststofffolien zurückgegriffen, in die ein Dämmstoff eingeschweißt ist.

Eine alternative Ausgestaltung der Erfindung sieht vor, daß mindestens eine Trennwand und/oder Abdichtschicht zumindest bereichsweise im wesentlichen horizontal, insbesondere unter Aufteilung oder Grubenfüllung in einen oberen und einen unteren Bereich, angeordnet ist. Indem man in die Grubenfüllung auch eine horizontale Trennwand oder Abdichtschicht einzieht, kann z.B. zusätzlich zu den vertikal ausgerichteten Speicherzonen eine weitere, unterhalb dieser Zonen angeordnete, insbesondere als Randzone fungierende Speicherzone ausgebildet werden. Des weiteren ist es möglich, diese horizontale Speicherzone durch die Anbringung vertikaler Trennwände und/oder Abdichtschichten selber wiederum zu segmentieren.

Dabei kann erfindungsgemäß vorgesehen sein, daß die innere Abdichtschicht fluiddicht mit der Seitenwandabdichtung verbunden ist oder an dieser anliegend zumindest abschnittsweise die Seitenwand hoch geführt ist.

Ferner kann erfindungsgemäß vorgesehen sein, daß die unterhalb der inneren Abdichtschicht vorliegende Zone oder Zonen, über mindestens ein Fluidauslaßrohr benachbart zur Sohle aufweist bzw. aufweisen.

Dabei sieht eine erfindungsgemäße Ausführungsform vor, daß die Sohle zumindest abschnittsweise im wesentlichen geneigt unter Ausbildung mindestens einer Senke, insbesondere im Zentrum der Grubenstruktur, ausgeführt ist.

Von Vorteil ist es weiterhin, wenn der erfindungsgemäße Mehrkammerwärmespeicher über mindestens eine über der Abdichtschicht der Sohle zumindest abschnittsweise vorliegende Vlies-, geotextile und/oder mineralische Schutzschicht verfiigt. Um die flüssigkeitsdichte Abdichtschicht auf der Sohle vor Beschädigung durch das aufliegende körnige oder splitterartige Grubenfüllungsmaterial zu schützen, bietet es sich häufig an, chemisch inerte und wasserneutrale Schutzschichten auf der obersten Abdichtschicht der Sohle anzubringen.

In einer besonders zweckmäßigen Ausgestaltung verfügt der erfindungsgemäße Mehrkammerwärmespeicher über mindestens ein in der Grubenstruktur benachbart zur Sohle oder auf oder in der Sohle, insbesondere in einer Senke, angebrachtes Fluidauslaßrohr, insbesondere Drainagerohr, und/oder mindestens ein in, unterhalb oder benachbart zu der Abdeckung angebrachtes Einlaßrohr, insbesondere enthaltend ein Sprührohr oder mindestens eine Sprühdüse. Der Wärmeeintrag in den Speicher bzw. die Speicherzonen erfolgt bevorzugt über das Versprühen von Wasser über die Oberfläche der Speicherfüllung. Hierdurch wird ein sehr gleichmäßiger Wärmeeintrag in die einzelnen Zonen und eine sehr gleichmäßige Temperaturverteilung der Grubenfüllung von der Abdeckung bis zur Sohle erreicht.

Dabei kann vorgesehen sein, daß jede Zone über mindestens ein Auslaßrohr und/oder über mindestens ein Einlaßrohr verfügt bzw. verfügen.

Geeignete Mehrkammerwärmespeicher verfügen ebenfalls über mindestens eine unterhalb der thermischen Dämmschicht der Abdeckung vorliegende Wasserdampfdiffusionssperrschicht, insbesondere ein mit einer Aluminiumfolie kaschiertes Schutzvlies, und/oder mindestens eine oberhalb der Abdichtschicht der Abdeckung vorliegendes Schutzvlies, eine textile Deckendichtung, (co)extrudierte Kunststoffolie, Drainageschicht, Bodenschicht und/oder Humusschicht.

Von Vorteil ist ferner, wenn die Grubenfüllung im wesentlichen inkompressibles körniges und/oder splittartiges Material, insbesondere mit einer 11/16- und/oder 11/22-Körnung und besonders bevorzugt mit einer 2/8- und/oder 2/11-Körnung, aufweist. Im allgemeinen hat es sich als ausreichend erwiesen, wenn als Grubenmaterial auf grobkörnigen Kies, gebrochenen Bauschutt, z.B. aus Beton oder Ziegeln, Schlacken hoher Dichte, z.B. Elektroofenschlacken, oder ansonsten nicht verwertbares Überlagerungsgestein aus Steinbrüchen oder aus beliebigen Mischungen der vorgenannten Materialien zurückgegriffen wird. Insbesondere wird bei grobkörnigem Kies und gebrochenem Bauschutt auf solche Materialien mit keinem oder nur einem geringen Kalksteinanteil zurückgegriffen. Je nach Hohlraum des Grubenfüllungsmaterials können in der Regel zusätzlich noch etwa 15 bis 30 Vol.-% an Warmwasser aufgenommen werden. Besonders bevorzugt wird zur Füllung der Grube des Mehrkammerwärmespeichers auf so genannten Fein- und Mittelsplit zurückgegriffen, insbesondere auf Material mit einer Körnung von 2/5, 5/8 und 8/11. Selbstverständlich können auch beliebige Mischungen dieser Splittypen zum Einsatz kommen, beispielsweise ein Split mit einer 5/11-, 2/8- oder 2/11-Körnung, gegebenenfalls vermischt mit geringen Anteilen an grobkörnigerem Splittmaterial, z.B. 11/16 oder 16/22-Material. Die Verwendung eines fein- und/oder mittelkörnigen Grubenmaterials hat den Vorteil, dass eine dichtere Packung resultiert, was wiederum ein langsameres Durchsickern der von oben auf das Grubenmaterial aufgegebenen Flüssigkeit zur Folge hat. Letztendlich geht hiermit auch eine größere Wärmekapazität einher und es ist zudem möglich, Mehrkammerwärmespeicher mit einer flacheren Bauweise zu realisieren. Bedingt durch das langsamere Hindurchtreten des Wassers durch das Grubenfüllmaterial steht mehr Zeit für einen Wärmeaustausch zur Verfügung, weshalb die Notwendigkeit für lange Fallwege entfällt.

Gemäß einem weiteren Aspekt der Erfindung zeichnet sich ein Mehrkammerwärmespeicher aus durch zumindest abschnittsweise benachbart zur Seitenwand vorliegende beabstandete Erdsonden. Die Verwendung von Erdsonden bei erfindungsgemäßen Mehrkammerwärmespeichern empfiehlt sich regelmäßig stets dann, wenn die Seitenwände vollständig oder abschnittsweise ohne Wärmedämmung ausgeführt werden. Die dann in diesen Bereichen auftretende Wärmestrahlung in den umgebenden Boden kann von den dort benachbart angebrachten als Wärmetauscher eingesetzten Erdsonden aufgenommen und dem Energiesystem der segmentierten Grubenstruktur wieder zugeführt werden.

Von Vorteil ist es weiterhin, wenn die Abdeckung, insbesondere von deren Mitte, zu den Seitenwänden der Grubenstruktur hin geneigt ist. Mit vorliegender Ausführungsform wird verhindert, daß sich größere Wassermengen auf der Abdeckung ansammeln können.

Gemäß einer weiteren Ausführungsform verfügt ein erfindungsgemäßer Mehrkammerwärmespeicher über mindestens eine an oder im Bereich der Außenseite von Sohle und/oder Seitenwand vorliegende Abdichtschicht, mindestens eine außerhalb dieser Abdichtschicht im Bereich von Sohle und/oder Seitenwand zumindest bereichsweise vorliegende Sickerschicht, insbesondere umfassend eine hohlraumreiche Granulatschicht, und/oder mindestens eine weitere, die Sickerschicht nach unten und/oder zur Seite abgrenzende Abdichtschicht.

Von besonderem Vorteil ist dabei, wenn die Sickerschicht in Wirkverbindung mit der Drainageschicht der Abdeckung steht und/oder mindestens eine Entnahmeleitung aufweist.

Gemäß einem weiteren Aspekt der Erfindung zeichnet sich ein Mehrkammerwärmespeicher auch aus durch eine im wesentlichen flüssigkeitsdichte Wannenkonstruktion und/oder Membranwanne, die die Grubenstruktur umgibt, um Grundwasser von dieser fernzuhalten, wobei die Wannenkonstruktion und/oder die zwischen Sohle und/oder Seitenwand der Grubenstruktur und der Innenwand der Wannenkonstruktion und/oder der Membranwanne vorliegende Schüttung Ballastmaterial, insbesondere grobkörnige Elektroofenschlacke, umfaßt, um die Wannenkonstruktion und/oder die Membranwanne gegen Auftrieb zu sichern. Zwar besteht die Möglichkeit, erfindungsgemäße Mehrkammerwärmespeicher in Gebieten mit hohem Grundwasserstand auf das Gelände aufzusetzen. Dieses geht jedoch häufig zu Lasten des Orts- oder Landschaftsbildes. Mit der vorhergehend dargestellten Ausführungsform lassen sich erfindungsgemäße Mehrkammerwärmespeicher jetzt auch ohne weiteres an Orten mit hohem Grundwasserstand errichten. Dabei hat sich ein Mehrkammerwärmespeicher mit einer sich zumindest bereichsweise an die Außenwand der Wannenkonstruktion und/oder der Membranwanne anschließenden grobkörnigen Bodenschicht und mindestens einem, diese Schicht umgebenden Schutzvlies und/oder -gewebe als besonders vorteilhaft herausgestellt.

In einer weiteren Ausführungsform verfügen erfindungsgemäße Wärmespeicher ebenfalls über mindestens eine Betriebs- und/oder Steuereinheit, enthaltend mindestens eine Umwälzpumpe, einen Wärmetauscher und/oder eine Zu- und Ablauf-, insbesondere, eine Ventil- und/oder Sprührohrsteuerung.

Dabei können erfindungsgemäße Mehrkammerwärmespeicher mindestens einen zumindest bereichsweise auf der Abdeckung und/oder, insbesondere im Erdreich, oberhalb der Abdekkung vorliegenden Teich umfassen.

Als besonders zweckmäßig hat sich dabei herausgestellt, wenn der Teich mindestens einen lageveränderbaren, insbesondere um eine Achse, einen Ankerzapfen und/oder einen Achszapfen dreh- und/oder schwenkbaren, Schwimmponton enthaltend mindestens einen, insbesondere dreh- und/oder schwenkbaren, Sonnenkollektor, insbesondere Parabolrinnen-, Vakuumflach- oder Vakuumröhrenkollektor, umfaßt.

Besonders vorteilhaft ist es dabei, wenn der Schwimmponton und/oder der Sonnenkollektor in der Weise drehbar ist bzw. sind, daß das einfallende Sonnenlicht maximal nutzbar ist.

Gemäß einer erfindungsgemäßen Ausgestaltung ist vorgesehen, daß die über die Sonnenkollektoren gewinnbare Wärmeenergie und/oder die in den Sonnenkollektoren aufgewärmte Flüssigkeit, insbesondere Wasser, zur Erwärmung mindestens einer Zone des Mehrkammerwärmespeichers einsetzt.

In einer bevorzugten Ausführungsform zeichnet sich der erfindungsgemäße Mehrkammerwärmespeicher dadurch aus, daß mindestens ein Motor, eine Steuerung zum Drehen des oder der Schwimmpontons und/oder von Sonnenkollektoren, und/oder mindestens ein Teil der Betriebs- und/oder Steuereinheit im Schwimmpontons angebracht ist.

Die der Erfindung zugrundeliegende Aufgabe wird des weiteren durch ein Verfahren zur Einbringung und Entnahme von Wärmeenergie in einen bzw. aus einem Wärmespeicher enthaltend eine feste Grubenfüllung, insbesondere in oder aus einem erfindungsgemäßen Wärmespeicher, wobei man das Wärmetransportmedium, insbesondere Wasser, in fein verteilter Form auf und/oder in die Grubenfüllung auf- bzw. einbringt, insbesondere auf und/oder in die Grubenfüllung sprüht.

Nicht nur gelingt mit dem erfindungsgemäßen Verfahren ein sehr gleichmäßiger Energie- bzw. Wärmeeintrag über die gesamte Zone, so daß keine Temperaturschichtungen innerhalb einer Zone beobachtet werden, auch läßt sich über das Einsprühen eines flüssigen Transportmediums die in der festen Grubenfüllung unabhängig von der anfänglichen Temperatur des Wärmetransportmediums gespeicherte Wärmeenergie auf sehr effiziente Weise abgreifen.

Der Erfindung lag somit die überraschende Erkenntnis zugrunde, daß sich besonders effizient zu bewirtschaftende Großwärmespeicher erhalten lassen, indem man eine Grubenfüllung aus körnigem oder granulatartigem Material durch die Verwendung von Trennwänden in eine Vielzahl von Zellen, zwischen denen allenfalls ein bedingter Fluid- und/oder Wärmeaustausch stattfindet, unterteilt. Für einzuspeisende Wärmeenergie kann dann gezielt diejenige Zone mit dem jeweils günstigsten Temperaturprofil ausgewählt werden. Ferner ist es möglich, interne Umschichtungen der Wärmemenge aus kälteren in wärmere Zonen durch den Einsatz von Wärmepumpen z.B. dann vorzunehmen, wenn günstige Stromtarife zur Verfügung stehen. Des weiteren können ohne weiteres auch unterschiedliche Wärmequellen parallel oder nebeneinander berücksichtigt werden. Beispielsweise lassen sich unterschiedliche Sonnenkollektortypen mit unterschiedlichen Anwendungsdomänen einsetzen.

Des weiteren erlaubt das erfindungsgemäße Speichersystem auch kühlende Anwendungen durch den Wärmeaustausch von Flüssigkeit aus den Randzonen mit einem wärmespendenden Verbraucher, wie etwa bei der sommerlichen Kühlung und Klimatisierung von Gebäuden. Von Vorteil ist weiterhin, daß sich ebenfalls Niedrigsttemperaturwärme, beispielsweise von unterhalb 30°C, nutzen läßt durch Einspeisung in die äußeren Speicherzonen. Durch die Einleitung von Niedrigsttemperaturwärme in diese Randzonen erhöht sich regelmäßig dort die Zellentemperatur, was wiederum die Gesamtwirkung des Speichers aufgrund der dann verminderten Wärmediffusion aus den inneren Zonen in das umgebende Erdreich erhöht. Dieser Aspekt ist auch deshalb von besonderem Vorteil, weil sich Niedrigsttemperaturwärme vielfältig abgreifen läßt, z.B. als Rücklauftemperatur von Wärmeverbrauchern oder beim Betrieb von Sonnenkollektoren an Warmtagen ohne direkte Sonneneinstrahlung.

Im Folgenden werden zur weiteren Erläuterung und zum besseren Verständnis der Erfindung Ausführungsbeispiete unter Bezugnahme auf die beigefügten Zeichnungen näher beschrieben und erläutert. Es zeigen:
- Figur 1: einen erfindungsgemäßen Wärmespeicher in schematischer Querschnittsansicht,
- Figur 2 a), b): zwei alternative Ausführungsformen erfindungsgemäßer Wärmespeicher in perspektivischer Draufsicht,
- Figur 3: eine alternative Ausführungsform eines erfindungsgemäßen Wärmespeichers in schematischer Querschnittsansicht,
- Figur 4: eine alternative Ausführungsform eines erfindungsgemäßen Wärmespeichers in schematischer Querschnittsansicht,
- Figur 5: eine alternative Ausführungsform eines erfindungsgemäßen Wärmespeichers in schematischer Querschnittsansicht,
- Figur 6: eine alternative Ausführungsform eines erfindungsgemäßen Wärmespeichers in schematischer Querschnittsansicht, und
- Figur 7: eine alternative Ausführungsform eines erfindungsgemäßen Wärmespeichers in schematischer Querschnittsansicht.

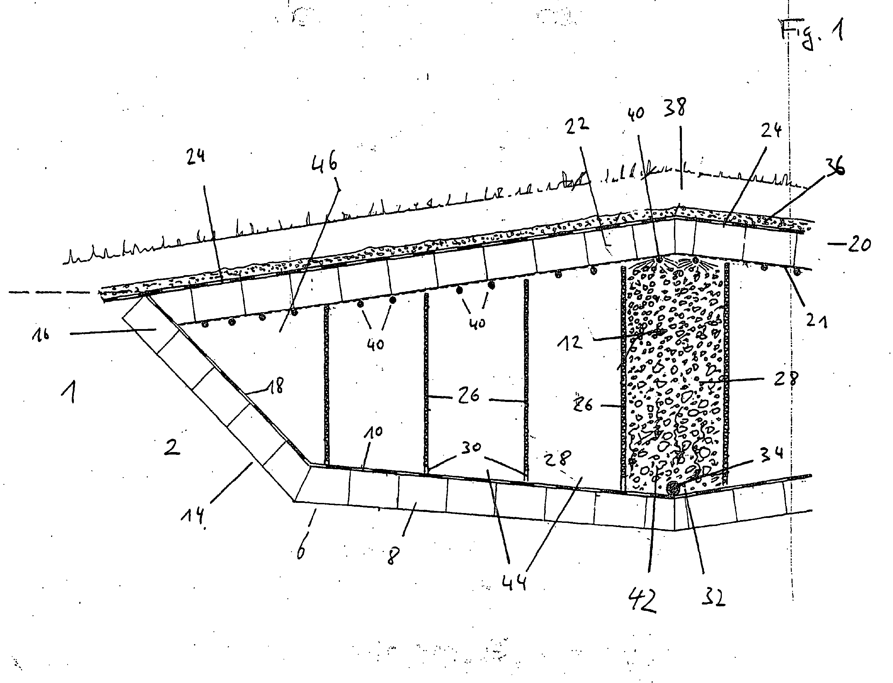

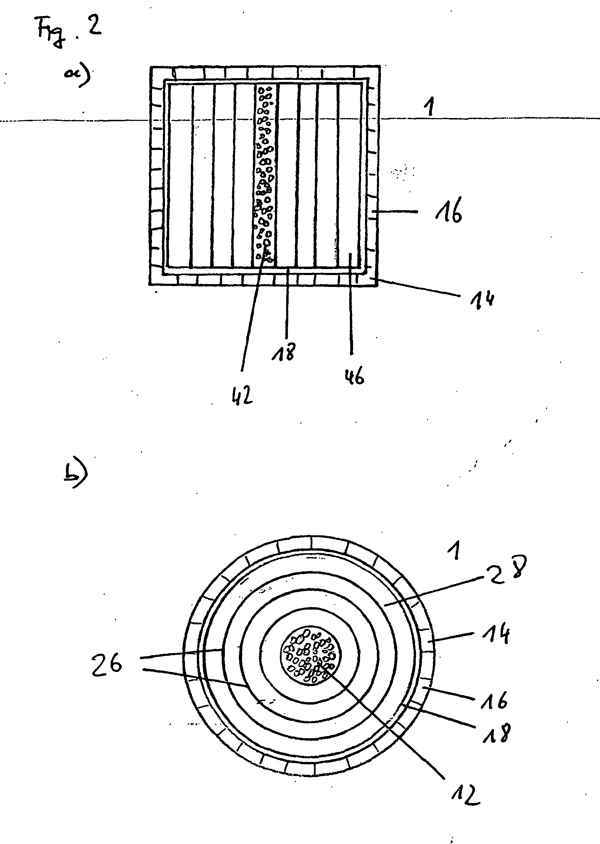

Figur 1 ist ein erfindungsgemäßer Mehrkammerwärmespeicher 1 in Querschnittsansicht zu entnehmen. Die Grubenstruktur 2 des Wärmespeichers 1 ist zum überwiegenden Teil in das Erdreich 4 eingelassen. Die Sohle 6 ist zum Zentrum der Grubenstruktur 2 hin geneigt und umfaßt eine aus geschlossenporigen Hartschaumstoffblöcken bestehende Deckschicht 8 und eine auf dieser Dämmschicht aufliegende Abdichtschicht 10 in Form einer Kunstoffdichtungsbahn. Die Grube 2 ist in dem durch die Sohle 6, Seitenwand 14 und Abdeckung 20 gebildeten Raum mit Grubenfüllmaterial 12 in Form von grobkörnigem Kies gefüllt. Der besseren Übersicht wegen sind in Fig. 1 sowie in den nachfolgenden Zeichnungen Grubenfüllungen jeweils exemplarisch nur für einzelne Zonen eingezeichnet, obwohl das Grubenmaterial 12 in sämtlichen Zonen 28 vorliegt. Selbstverständlich kann in einer weiteren Ausführungsform ebenfalls vorgesehen werden, einzelne Zonen mit einem Wärmeträgerfluid, z.B. Wasser, zu füllen, sofern die Statik der Trennwände 26 und/oder der Grubenstruktur 12 dieses zuläßt. Zum Schutz vor Beschädigung durch aufliegende Grubenfüllung 12 kann die Abdichtschicht mit einer geotextilen und/oder mineralischen Schutzschicht versehen werden (nicht abgebildet). Geeignete Hartschaumstoffblöcke stellen z.B. solche aus extrudiertem Polystyrolhartschaum dar. Dabei haben sich Dicken im Bereich von 0,2 bis 1,5 m als ausreichend erwiesen. Die Seitenwand 14 ist in der abgebildeten Ausführungsform gemäß Figur 1 in ähnlicher Weise wie die Sohle mit einer thermischen Dämmschicht 16 aus Hartschaumblöcken sowie einer Abdichtschicht 18 in Form einer Kunststofflage versehen. Die Abdichtschicht 18 ist flüssigkeitsdicht mit der Abdichtschicht 10 der Sohle sowie mit der Abdichtschicht 24 der Abdekkung 20 der Grubenstruktur 2 verbunden. Die Auflageflächen für die Sohle 6 und die Seitenwand 14 werden regelmäßig vor der Installierung der Hartschaumstoffblöcke planiert und verdichtet. Die Grubenstruktur 2 wird mit einer grobkörnigen Grubenfüllung 12, z. B. Kies, vollständig aufgefüllt, wobei eine Vielzahl an beabstandeten Trennwänden 26 zu einer Unterteilung in Zonen 28 führt. Die Trennwände 26 erstrecken sich dabei regelmäßig von der auf der Grubenfüllung 12 aufliegenden Abdeckung 20 bis zur Sohle 6 oder Seitenwand 14. In der vorliegenden Ausführungsform sind die Trennwände 26 als wärmeisolierende Kunststoffplatten, die eingeschweißt in einer Kunstoffumhüllung vorliegen, ausgeführt. Im Bereich der Sohle sind Aussparungen oder Durchlaßöffnungen 30 vorgesehen, durch die Speicherfüllungs- oder Sickerwasser dem in der Senke 32 befindlichen Drainagerohr 34 zugeführt werden kann. Die Abdeckung 20 der Grubenstruktur 2 weist auf der Unterseite eine Wassserdampfdiffusionsschicht 21 auf. Daran schließen sich eine Dämmschicht 22 in Form benachbarter Hartschaumstoffblöcke und eine Kunststofffolienbahn 24 zur Abdichtung gegen Flüssigkeitseintritt von oben an. Eine auf der Abdichtschicht 24 verlegte Drainageschicht 36 leitet das durch die Abdeckschicht 38 einsickernde Oberflächenwasser in Folge der geneigten Ausgestaltung der Abdeckung 20 an die Seiten des Wärmespeichers ab, wo es im Untergrund versickern kann. Bereits mit einer etwa 1 m dicken, aus Erdreich bestehenden Schutzschicht 38 kann der erfindungsgemäße Wärmespeicher 1 wirksam vor Frost geschützt werden. Unmittelbar unterhalb der Abdeckung 20 befinden sich Sprührohre 40, mit denen jede Zone 28 mit warmem Wasser besprüht werden kann. Mit Hilfe der Trennwände 26 wird ein Wärmespeicher 1 erhalten, der mit einer oder mehreren Kernzonen 42, mit Mittelzonen 44 und einer Randzone 46 ausgestattet ist, wodurch sich ein sehr effizientes Temperaturprofil einstellen läßt. Über die Trennwände 26 ist beispielsweise eine Grubenstruktur 2 zugänglich, bei der die einzelnen Zonen 28 im wesentlichen geradlinig benachbart nebeneinander liegen. Alternativ können in einer bevorzugten Ausführungsform die jeweiligen Trennwände 26 umlaufend, z.B. unter Ausbildung von kreisförmigen Wänden, gestaltet sein. Draufsichten der zwei vorhergehend geschilderten Ausführungsformen unter jeweiliger Weglassung der Abdeckung sind den Figuren 2a und 2b zu entnehmen.

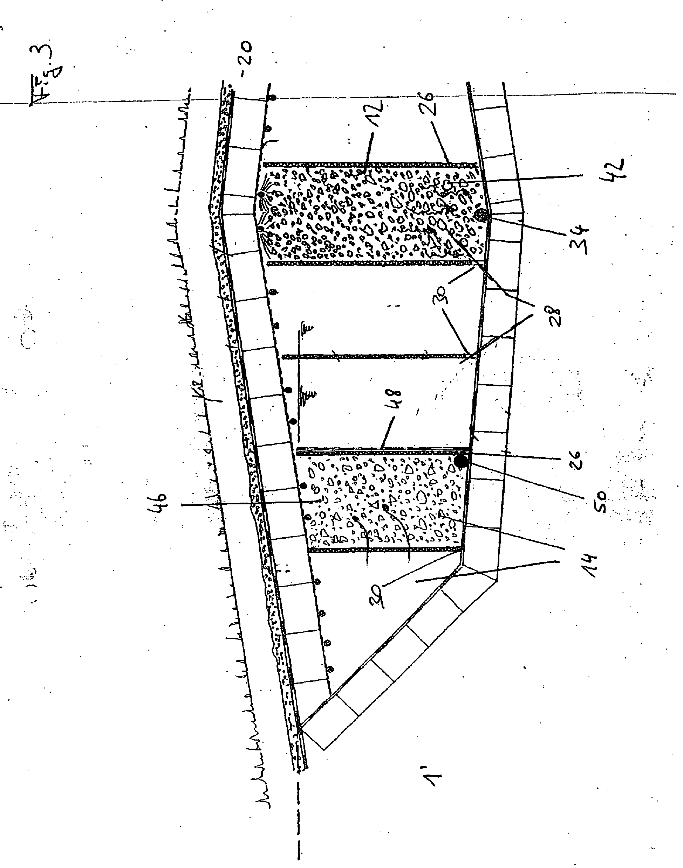

Figur 3 zeigt einen erfindungsgemäßen Wärmespeicher 1 mit einer zusätzlichen Abdichtungsschicht in Form einer Kunststoffolie 48 entlang einer Trennwand 26, die sich von der Abdekkung 20 bis zur Sohle 6 erstreckt und mit diesen flüssigkeitsdicht verschweißt ist. Die Abdichtung 48 ist entlang einer umlaufenden Trennwand 26 angebracht, so daß eine vollständig abgetrennte Randzone 14 erhalten wird, die völlig unabhängig von der Kernzone 42 bewirtschaftet werden kann. Hierzu empfiehlt es sich, ein zusätzliches Drainagerohr 50 an der tiefsten Stelle der Zone 46 anzubringen.

Im Standartbetrieb sind die jeweiligen Zellen bzw. Zonen nicht mit Wasser gefüllt. Wasser dient überlicherweise nur als Wärmeübertragungsmedium, das seine Wärmeenergie an die in der jeweiligen Zone vorliegende Grubenfüllung 12 abgibt und durch das Drainagerohr wieder abgeführt wird. Auf diese Weise kommt es nicht zu den konvektiven Wärmebewegungen, wie sie von mit wassergefüllten Zellen bekannt sind. Allerdings kann das Hohlraumvolumen der Grubenfüllung durchaus auch mit heißem Wasser aufgefüllt werden, um eine noch höhere Energiemenge zu speichern. Im Allgemeinen hat es sich als zweckmäßig erwiesen, wenn im Gesamtspeicher in etwa zwischen 30 bis 50 % des freien Porenvolumens mit Wasser gefüllt vorliegen. Der Wärmeeintrag in den erfindungsgemäßen Wärmespeicher sowie die spätere Entnahme erfolgen vorteilhafterweise durch Versprühen von Wasser über die Oberfläche der Grubenfüllung. Hierdurch wird auf sehr zügige und wirksame Weise eine sehr gleichmäßige Temperaturverteilung entlang der gesamten Höhe einer Speicherzone erreicht. Des weiteren läßt das Sprühverfahren die Umschichtung von Restwärme in andere, thermisch weitgehend entleerte Speicherzellen zu, da kein direkter Rückfluß von Wasser in die im Entnahmestatus befindlichen Speicherzellen notwendig ist. Damit kann auch Niedertemperaturrestwärme unterhalb der Minimaltemperatur von Ein-Kammer-Heißwasserwärmespeichem ohne Beeinträchtigung mehrerer Speicherzonen wieder als Nutzwärme gespeichert werden.

Die erfindungsgemäßen Mehrkammerwärmespeicher mit thermisch voneinander isolierten und individuell zu bewirtschaftenden Volumensegmenten erlauben z.B. eine Optimierung des Nahwärmesystems. Bei geeigneter Auslegung der einzelnen Speicherzellen auf die zeitlich, im Volumen und bezüglich Temperatur zur Verfügung stehenden Wärmequellen und der zu bewirtschaftenden Wärmeverbraucher ist eine vielfältige und selektive Nutzung von Wärme möglich. Innerhalb der Grubenstruktur bilden wärmeleitungsbedingte Wärmeabflüsse aus inneren Hochtemperaturzonen in äußere Niedertemperaturzonen eine Wärmequelle für die äußeren Randzonenspeicher auf relativ niedrigem Temperaturniveau. Die äußeren Niedertemperaturzonen minimieren zudem den Temperaturunterschied zwischen den Kern-, Zwischen- und Randzonen und dem umgebenden Erdreich und damit den Wärmeverlust des Gesamtsystems an das umgebende Erdreich.

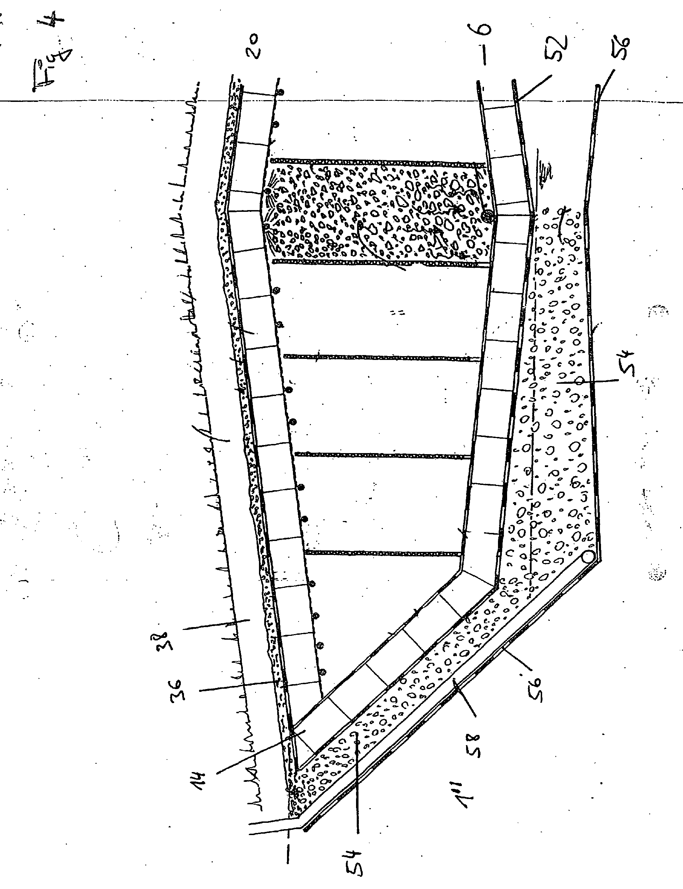

In Fig. 4 ist ein erfindungsgemäßer Mehrkammerwärmespeicher 1' wie in Fig. 1 dargestellt, der zusätzlich unter der Sohle 6 und benachbart zur Außenseite der Seitenwand 14 eine weitere flüssigkeitsundurchlässige Abdeckschicht 52, eine hohlraumreiche Granulatschicht 54, z.B. aus Kies oder Natursteinschotter, sowie zur Abgrenzung dieser Granulatschicht eine weitere Abdichtschicht 56 aufweist. Die Granulatschicht 54 steht dabei in Wirkverbindung mit der auf der geneigten Abdeckung 20 vorliegenden Drainageschicht 36, so daß beispielsweise auf den Wärmespeicher 1' fallendes Niederschlagswasser in die Abdeckschicht 38 einsickern und entlang der Seitenränder in die hohlraumreiche Granulatschicht 54 eindringen kann. Hierbei ist dafür Sorge zu tragen, daß die untere Abdichtschicht 56 in Bereich der Seitenwandungen 14 bis auf die Höhe der Abdeckung 20 hochgezogen wird. Das beim Versickern durch die Granulatschicht 54 gereinigte Niederschlagswasser wird über eine Entnahmeleitung 58 abgepumpt und kann z.B. in an den Wärmespeicher angeschlossene Gebäuden als hochwertiges Brauchwasser zum Betrieb von Toiletten, Waschmaschinen oder zur Gartenpflege oder dergleichen verwendet werden. Bei kalter Witterung kann die gleichmäßige und moderate Vorlauftemperatur des in der Granulatschicht 54 befindlichen Wassers, insbesondere während der Nacht, in eine Grundwasserwärmepumpe zum Nachladen des Wärmespeichers 1' genutzt werden.

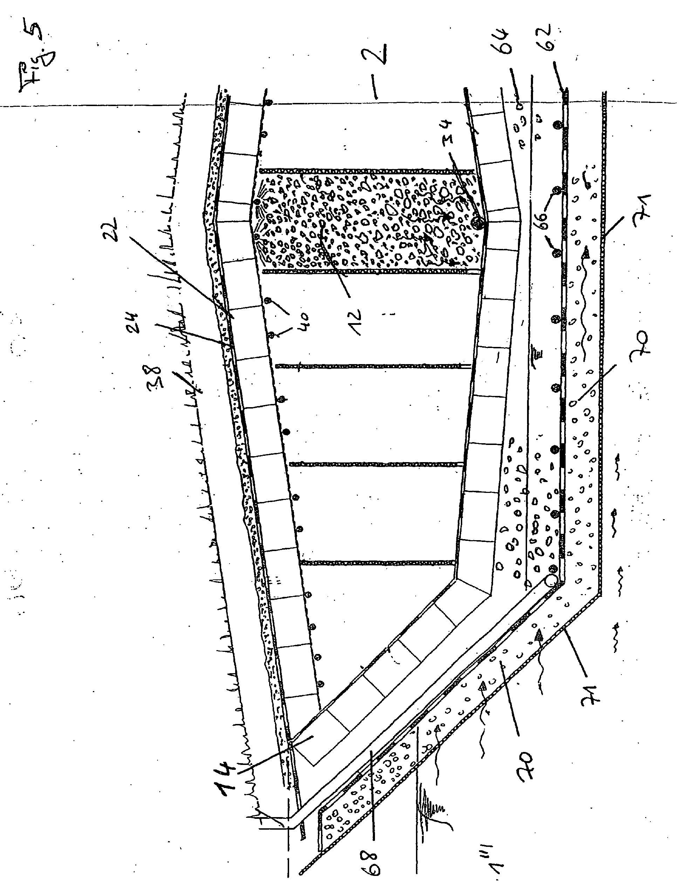

Fig. 5 ist die Querschnittsansicht einer alternativen Ausführungsform eines erfindungsgemäßen Wärmespeichers 1" zu entnehmen, bei der ein erfindungsgemäßer Wärmespeicher, z.B. gemäß Figur 1 durch eine Wannenkonstruktion bzw. Membranwanne 62 vor direktem Grundwasserkontakt geschützt wird, welches gegebenenfalls die Dämmschicht in Mitleidenschaft ziehen könnte. Die vornehmliche Aufgabe der Wannenkonstruktion bzw. Membranwanne 62 ist es auch, den Grundwasserfluß an der Grubenstruktur vorbeizulenken und die Stauung von Grundwasser zu verhindern. Eine geeignete Wannenkonstruktion auf der Basis von betonierter Sohle und Umrandung kann beispielsweise der DE 199 30 701 entnommen werden. Bei einer solchen Wannenkonstruktion kann es sich z.B. um eine sogenannte weiße oder schwarze Betonwanne handeln, bei der der Beton an sich dicht ist bzw. durch eine zusätzliche Außendichthülle oder -schicht abgedichtet wird. Des weiteren ist es möglich, eine flüssigkeitsdichte Membranwanne 62, z.B. eine solche, in die bereits Materialien hoher Dichte, z.B. Elektroofenschlacken, eingearbeitet sind, zu verwenden. Außerdem ist eine Membranwanne besonders geeignet, deren Aufbau im wesentlichen dem der Sohle 6 oder der Wandung 14 oder der Abdichtschicht 10 oder 18 entspricht. Zum Schutz gegen das Ballastmaterial 64 und das Schottermaterial 70 kann die Membranwanne 62 ober- bzw. unterseitig eine Schutzvliesschicht und/oder Sandschicht aufweisen. Solche Schutzvliese, die z.B. bei Wasserkontakt stark aufquellen können, sind dem Fachmann bekannt. Zur weiteren Sicherung gegen Auftrieb kann diese Membranwanne 62 mit zusätzlichen, darauf angebrachten Ballastschichten 64, die ebenfalls Elektroofenschlackenrückstände beinhalten können, beschwert werden. In diese Ballastschicht 64 läßt sich dann ohne weiteres die Grubenstruktur 2 einbringen. Es hat sich als vorteilhaft erwiesen, direkt beim Einbau der Membran- bzw. Kunststoffdichtungsschicht 62 und der darauf und darunter angebrachten Schutzschichten bzw. Schutzvliese gegen Beschädigung durch das Ballastmaterial 64 (nicht abgebildet) benachbarte, flexible Rohre 66 vorzusehen, mit denen durch Umpumpen von Wasser die Membranwanne, z.B. in Form einer Kunststoffdichtung 62, abgesenkt werden kann. Dabei kann ein Teil des zum Absenken in die Membranwanne 62 gepumpten Wassers in der Ballastschüttung 64 verbleiben, wenn über ein in diese Wannenkonstruktion eingebautes Pegelrohr 68 der Wasserstand fortwährend kontrolliert und geregelt werden kann, so daß sicher gestellt ist, daß die Wärmedämmung von Sohle 6 und Seitenwandung 14 keinen Kontakt mit dem Wasser bekommt. Über die im Wasser der Membrankonstruktion 62 vorliegenden Rohre 66 kann das Wärmepotential des an der Kunststoffdichtung großflächig vorbeiströmenden Grundwassers zur Gebäudekühlung im Sommer sowie zum Betrieb einer Grundwasserwärmepumpe zur Nachladung des Wärmespeichers 1" im Winter genutzt werden. Dazu wird das Wasser in der Membranwanne, dessen Temperatur auch durch die Temperatur des vorbeiströmenden Grundwassers bestimmt wird, über die Rohre 66 beispielsweise durch geeignet temperierte Zonen des Mehrkammerwärmespeichers geleitet. Des weiteren hat es sich als vorteilhaft erwiesen, die Membranwannenkonstruktion 62 auf ihrer Außenseite mit einer Bodenschicht 70 aus grobkörnigem Bodenmaterial oder, insbesondere feinkörnigem, Schotter und sich einer daran anschließenden Filtervlies- oder -gewebeschicht 71 zu versehen. Geeignete Filtervliese bzw. -gewebe verfügen z.B. über eine durchschnittliche Maschenweite ein Bereich von etwa 1,0 bis 0,01 mm. Selbstverständlich können auch Mehrschichtenfilter zum Einsatz kommen. Die grobkörnige Bodenschicht wirkt als Düker, wobei die Vlies- oder Gewebeschicht 71 diesen Düker gegen das Einspülen von Feinteilen oder Feinsand und einer daraus resultierenden Verschlämmung der Hohlräume schützt. Hierdurch wird auch erreicht, daß der durch den Einbau der Grubenkonstruktion 2 des Wärmespeichers 1" in das Erdreich bedingten Abflußquerschnittverkleinerung des Grundwasserstroms entgegengewirkt wird. Der natürliche Grundwasserverlauf wird somit nicht oder nur unwesentlich behindert bzw. umgelenkt und die Wannenkonstruktion bzw. Membranwanne wird wirkungsvoll mit Grundwasser unterströmt, was einen guten Wärmetransport ermöglicht. Dadurch wird auch das Grundwasser ein Teil Wärmekopplung des erfindungsgemäßen Wärmespeichers.

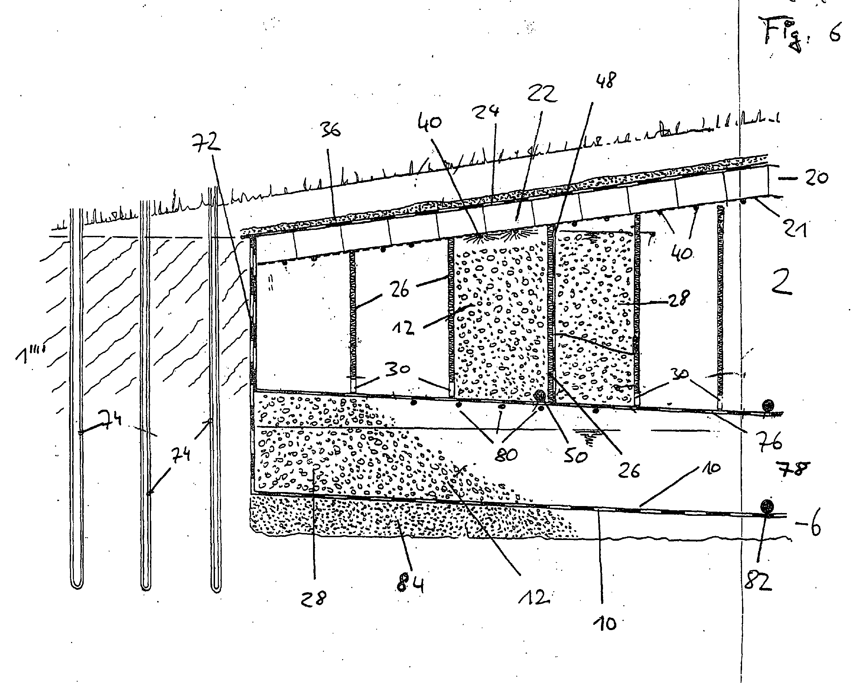

Die Fig. 6 zeigt einen Ausschnitt aus einer Querschnittsansicht einer alternativen Ausführungsform eines erfindungsgemäßen Wärmespeichers 1"'. Dabei sind die Abdeckung 20 sowie die vertikalen Trennwände 26 im wesentlichen, wie in Fig. 3 beschrieben, ausgeführt. Allerdings liegen die Seitenwände 72 nicht geneigt, sondern im wesentlichen senkrecht orientiert vor. Anstelle einer Dämmschicht aus geschäumten Kunststoffkörpern, kommt eine Schüttung aus mineralischen Damm-Materialien im Sohlenbereich 6 zum Einsatz. Die Abdeckschicht 10 ist wiederum in Form einer Kunststoffolie ausgeführt, die sich zum Zentrum der Grubenstruktur 2 hin neigt. Die Seitenwand 72 kommt bei der folgenden Ausführungsform ohne eine herkömmliche Dämmschicht, wie z.B. in den vorhergehenden Ausführungsformen der Figuren 1 bis 5 beschrieben, aus. Anstelle einer Dämmschicht sind benachbart zur Seitenwandung 72 beabstandete Erdsonden 74 vorgesehen, die sich zweckmäßigerweise bis in den Bereich unterhalb der Sohle 6 erstrecken. Der Einsatz von mineralischen Dämmschichten 84 im Sohlenbereich 6 bietet sich insbesondere dann an, wenn wegen größerer Bauhöhen das Gewicht der Speicherfüllung die zulässige Belastung für Blöcke aus geschäumten Kunststoffkörpern übersteigt. Mit einer mineralischen Wärmedämmung 84 können regelmäßig größere Druckfestigkeiten gewährleistet werden. Indem die Seitenwände 72 bei der vorliegenden Ausführungsform ohne thermische Dämmschicht auskommen, kann die aus der Grubenstruktur 2 in den benachbarten Bodenbereich abgestrahlte Wärmeenergie von den als Wärmetauscher eingesetzten Erdsonden 74 aufgenommen und z.B. dem Energiesystem der Grubenstruktur 2 wieder zugeführt werden. Des weiteren kann insbesondere bei Wärmespeichern mit größerer Bauhöhe mindestens eine weitere Zone 28, 78 dadurch erhalten werden, daß man die Grubenstruktur 2 zusätzlich zu den sich von der Abdeckung 20 vertikal nach unten erstreckenden Trennwänden 26 durch eine sich an das Ende dieser vertikalen Trennwände anschließende im wesentlichen horizontal oder nur geringfügig geneigte weitere Abdichtschicht 76 unterteilt. Diese Abdichtschicht 76 liegt auf einer Grubenfüllung 12 auf, wie sie auch für die oberen Zonen 28 verwendet wird. Damit liegt im unteren Bereich der Grubenstruktur 2 eine seperate weitere Zone 78 vor, die z.B. als Zwischen- und/oder Randzone genutzt werden kann, und z.B. über eigene Sprührohre 80 und Drainagerohre 82 verfügt.

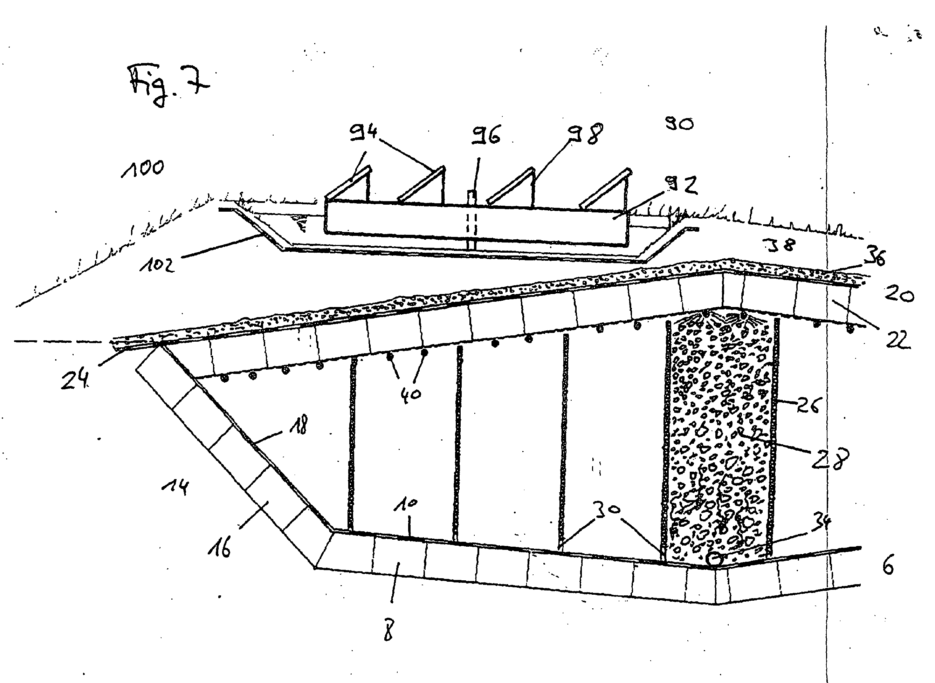

Figur 7 ist eine weitere Ausführungsform eines erfindungsgemäßen Wärmespeichers 100 zu entnehmen, der neben den charakteristischen Merkmalen der vorangehend beschriebenen Wärmespeicher, z.B. eines Wärmespeichers 1 gemäß Figur 1, über eine oberhalb der Abdekkung 20 angebrachte Teichanlage 90 verfügt. Zum Schutz der Abdichtschicht 24 sowie der Drainageschicht 36 sowie zur Sicherung des Wassers im Teich 90 ist dieser an seiner Unterseite und an seinen Böschungen mit einer Abdichtschicht 102 versehen. Zum Schutz gegen Beschädigung kann auch diese Abdichtschicht unter- und/oder oberseitig mit einer Vliesschicht versehen sein (nicht abgebildet). Der Schwimmponton 92 ist um den Anker- und Achszapfen 96 drehbar gelagert, so daß, ohne daß große Kräfte aufgewendet werden müssen, die Sonnenkollektoren 94 auf einfache Weise zu jeder Tageszeit optimal auf das einfallende Sonnenlicht ausgerichtet werden können. Die Sonnenkollektoren 94 werden über Tragegestelle 98 gehalten und können zwecks weiterer Optimierung der Energieausbeute selber wiederum dreh- bzw. schwenkbar gelagert sein. Die Anbringung von Sonnenkollektoren auf einem Schwimmponton hat nicht nur den Vorteil, daß eine Ausrichtung nach dem jeweiligen Sonnenstand sehr einfach gelingt, sondern erlaubt gleichfalls die sichere Unterbringung regelmäßig sehr kostenintensiver Sonnenkollektoren bei z.B. Sturm oder starken Windböhen allein darüber, daß man den Teich 90 entleert. Der Schwimmponton setzt sich auf der Sohle des Teiches unverrückbar ab und die Teichböschungen schützen die abgesenkten Sonnenkollektoren vor einem direkten Windangriff. Im übrigen bietet die dargestellte Plazierung von Sonnenkollektoren auf Schwimmpontons einen geeigneten Schutz gegen Vandalismus. Der Energie- bzw. Warmwasserertrag der Sonnenkollektoren kann unmittelbar zur Erwärmung der einzelnen Zonen des erfindungsgemäßen Wärmespeichers 100 eingesetzt werden. Je nach erzeugter Energie können dabei diejenigen Zonen mit dem geeignetsten Temperaturprofil angesteuert werden. Die Verbindungen zwischen den Sonnenkollektoren und den Sprührohren des Wärmespeichers sowie gegebenenfalls erforderliche Umwälzpumpen, Ventile oder Wärmetauscher sind in der Abbildung 7 der besseren Übersicht wegen nicht eingezeichnet. Die Anbringung eines Teiches 90 direkt oberhalb eines Mehrkammerwärmespeichers bietet darüber hinaus den Vorteil sehr kurzer Wärmeleitungswege, wodurch sich transportbedingte Wärmeverluste vermeiden lassen. Selbstverständlich kann der dargestellte Teich 90 auch neben bzw. benachbart zu einem Mehrkammerwärmespeicher oder entfernt von diesem angebracht sein, solange ein Wärmetransport in den Mehrkammerwärmespeicher möglich ist.

In einer alternativen Ausführungsform kann der Anker- und Achszapfen auch in Form eines Versorgungs- und Betriebsschachtes ausgebildet sein, beispielsweise mit einem Innendurchmesser von etwa 1 bis 3 Metern, der durch die Abdeckung des Mehrkammerwärmespeichers hindurch in, insbesondere die zentrale Zone, geführt wird, insbesondere bis in den Bereich der Sohle (nicht abgebildet).

Zur Steuerung und effektiven Bewirtschaftung der erfindungsgemäßen Mehrkammerwärmespeicher können in mindestens einer, bevorzugt jeder, Zone ein oder mehrere Temperaturkühler und/oder Wasserstandsmeßgeräte angebracht sein. Ferner kann über geeignete Volumenzähler die Menge an in die Grubenstruktur eingebrachter sowie entnommener Flüssigkeit, insbesondere kontinuierlich, bestimmt werden. In gleicher Weise ist es selbstverständlich möglich, Temperatursensoren für die Bestimmung der Wassertemperatur in einer Wannenkonstruktion oder einer Membranwanne 62 sowie für die Bestimmung des Grundwassers außerhalb dieser Wannenkonstruktion vorzusehen. Die mit den vorgenannten Sensoren bzw. Meßgeräten aufgenommenen Daten können einer zentralen Steuer- und Kontrolleinheit zugeführt und dort im Hinblick auf eine optimale Bewirtschaftung des erfindungsgemäßen Wärmespeichers ausgewertet werden. Hierbei wird selbstverständlich auch die Temperatur von zur Verfügung stehendem, in den Wärmespeicher einspeisbarem Wasser mitberücksichtigt, so daß sowohl beim Energieeintrag als auch beim Energieaustrag aus dem erfindungsgemäßen Wärmespeicher die effizienteste Bewirtschaftungsvariante, insbesondere automatisch gesteuert, gewählt werden kann.

### Bezugszeichenliste

- 1, 1', 1", 1"', 1"": Mehrkammerwärmespeicher
- 2: Grubenstruktur
- 4: Erdreich
- 6: Sohle
- 8: Dämmschicht der Sohle 6
- 10: Abdichtschicht der Sohle 6
- 12: Grubenfüllung
- 14: Seitenwand
- 16: thermische Dämmschicht der Seitenwand
- 18: Abdichtschicht der Seitenwand
- 20: Abdeckung
- 21: Wasserdampfdiffusionsschicht
- 22: thermische Dämmschicht der Abdeckung
- 24: Abdichtschicht der Abdeckung
- 26: Trennwand
- 28: Zone, Kammer
- 30: Aussparung
- 32: Senke
- 34: Drainagerohr
- 36: Drainageschutzschicht
- 38: Schutzschicht
- 40: Sprührohr
- 42: Kernzone
- 44: Mittelzone
- 46: Randzone
- 48: Abdichtschicht
- 50: Drainagerohr
- 52: Abdichtschicht unter der Sohle 6
- 54: Granulatschicht
- 56: Abdichtschicht
- 58: Entnahmeleitung
- 62: Membranwanne
- 64: Ballastschicht
- 66: flexibles Rohr
- 68: Pegelrohr
- 70: grobkörnige Bodenschicht
- 71: Filterschicht
- 72: Seitenwand
- 74: Erdsonde
- 76: Abdichtschicht
- 78: untere Zone
- 80: Sprührohr
- 82: Drainagerohr
- 84: mineralische Dämmschicht
- 90: Teich
- 92: Schwimmponton
- 94: Sonnenkollektor
- 96: Anker- und Achszapfen
- 98: Tragegestell
- 100: Mehrkammerwärmespeicher
- 102: Abdichtschicht

## Patentansprüche

1. Mehrkammerwärmespeicher zur Speicherung von Wärmeenergie, umfassend
eine, insbesondere in den Boden eingelassene, Grubenstruktur, umfassend
eine Sohle, eine umlaufende Seitenwand und eine Abdeckung, wobei die Grubenstruktur zumindest teilweise eine Feststoffgrubenfüllung enthält, **dadurch gekennzeichnet, daß**
die Grubenfiillung (12) durch mindestens zwei Trennwände (26) und/oder mindestens eine umlaufende Trennwand (26) in Zonen (28, 42, 44, 46, 78) unterteilt, ist, und daß die Sohle (6) mindestens eine thermische Dämmschicht (8) und mindestens eine, insbesondere oberhalb der Dämmschicht (8) angebrachte Abdichtschicht (10), insbesondere eine im wesentlichen wasserdichte, flexible Kunststoffdichtungsfolie, umfaßt und
daß die umlaufende Seitenwand (14) mindestens eine thermische Dämmschicht (16) und/oder mindestens eine, insbesondere innenliegende, Abdichtschicht (18) umfaßt, und daß die Abdeckung (20) der Grubenstruktur (2) mindestens eine thermische Dämmschicht (22) und mindestens eine oberhalb der Dämmschicht (22) vorliegende Abdichtschicht (24) umfasst, und wobei der Mehrkammerwärmespeicher mindestens ein in, unterhalb oder benachbart zu der Abdeckung (20) angebrachtes Einlaßrohr (40), enthaltend ein Sprührohr oder mindestens eine Sprühdüse, aufweist.

2. Mehrkammerwärmespeicher (1,1', 1", 1"', 1"") nach Anspruch 1, **gekennzeichnet durch**
eine im wesentlichen allseitig umlaufende thermische Dämmschicht (8, 16, 22) und/oder eine im wesentlichen allseitig umlaufende Abdichtschicht (10, 18, 24).

3. Mehrkammerwärmespeicher (1, 1', 1", 1 "', 1"") nach Anspruch 1 oder 2, **dadurch gekennzeichnet, daß**
die thermische Dämmschicht (16, 22) der Seitenwand (14) und/oder Abdeckung (22) mindestens eine Lage aus, insbesondere benachbarten, geschäumten Körpern, insbesondere großformatigen und/oder geschlossenporigen, Hartschaumstoffblöcken umfaßt.

4. Mehrkammerwärmespeicher (1, 1', 1", 1"', 1"") nach einem der vorangehenden Ansprüche, **dadurch gekennzeichnet, daß**
die thermische Dämmschicht (8) der Sohle (6) mindestens eine Lage aus, insbesondere benachbarten, geschäumten Körpern, insbesondere großformatigen und/oder geschlossenporigen Hartschaumstoffblöcken, und/oder mindestens eine Schicht aus mineralischen Dämmstoffen, insbesondere geschäumtem Glas, Blähton und/oder Blähschiefer, umfaßt.

5. Mehrkammerwärmespeicher (1, 1', 1", 1 "', 1 "") nach einem der vorangehenden Ansprüche, **dadurch gekennzeichnet, daß**
die Grubenfüllung (12) mehrere nebeneinander angeordnete, insbesondere im wesentlichen parallel verlaufende, und/oder sich kreuzende und/oder ein oder mehrere umlaufende, insbesondere zentrisch angebrachte, Trennwände (26) aufweist.

6. Mehrkammerwärmespeicher (1, 1', 1", 1"', 1"") nach einem der vorangehenden Ansprüche, **dadurch gekennzeichnet, daß**
die Trennwand (26) bzw. Trennwände (26) geneigt und/oder zumindest abschnittsweise im wesentlichen vertikal ausgerichtet sind und sich im wesentlichen von der Abdeckung (20), insbesondere unter Ausbildung einer im wesentlichen fluiddichten Anbindung an diese, bis zur Sohle (6) erstrecken.

7. Mehrkammerwarmespeicher (1, 1', 1", 1"', 1"") nach einem der vorangehenden Ansprüche, **dadurch gekennzeichnet, daß**
die Trennwand (26), insbesondere im Bereich der Sohle (6), mindestens eine Durchlaßöffnung (30) aufweist.

8. Mehrkammerwärmespeicher (1, 1', 1", 1"', 1"") nach einem der vorangehenden Ansprüche, **dadurch gekennzeichnet, daß**
mindestens eine Trennwand (26) und/oder eine, insbesondere zur Trennwand benachbarte, Abdichtschicht (48) zumindest bereichsweise mit der Sohle (6), insbesondere fluiddicht, unter Ausbildung abgeschlossener Zonen (28) verbunden ist.

9. Mehrkammerwärmespeicher (1, 1', 1 ", 1 "', 1"") nach Anspruch 8, **dadurch gekennzeichnet, daß**
mindestens eine Trennwand (26) und/oder eine, insbesondere zur Trennwand benachbarte, Abdichtschicht (48) die Grubenstruktur (2) in fluiddichte und/oder thermisch isolierte Zonen aufteilt, zwischen denen im wesentlichen kein freier Austausch an Fluid und/oder Wärmeenergie stattfindet.

10. Mehrkammerwärmespeicher (1, 1', 1 ", 1"', 1"") nach einem der vorangehenden Ansprüche, **dadurch gekennzeichnet, daß**
die Trennwand (26) eine Wand aus Stein, Beton, Metall und/oder Kunststoff, insbesondere einem druckfesten und/oder hochtemperaturbeständigen Kunststoff und/oder eine Kunststoffolie, umfaßt.

11. Mehrkammerwärmespeicher (1, 1', 1 ", 1"', 1 "") nach einem der vorangehenden Ansprüche, **dadurch gekennzeichnet, daß**
mindestens eine Trennwand und/oder innere Abdichtschicht (76) zumindest bereichsweise im wesentlichen horizontal, insbesondere unter Aufteilung der Grubenfüllung in einen oberen und einen unteren Bereich, angeordnet ist.

12. Mehrkammerwärmespeicher (1"") nach Anspruch 11, **dadurch gekennzeichnet, daß**
die innere Abdichtschicht (76) fluiddicht mit der Seitenwandabdichtung (72) verbunden ist oder an dieser anliegend zumindest abschnittweise die Seitenwand (72) hoch geführt ist.

13. Mehrkammerwärmespeicher (1"") nach Anspruch 11 oder 12, **dadurch gekennzeichnet, daß**
die unterhalb der inneren Abdichtschicht (76) vorliegende Zone (78) oder Zonen über mindestens ein Fluideinlaßrohr (80) benachbart zur Unterseite der inneren Abdichtschicht (76), insbesondere ein Sprührohr und/oder enthaltend eine Sprühdüse, und/oder über mindestens ein Fluidauslaßrohr (82), insbesondere auf, in oder benachbart zur Sohle (6), aufweist bzw. aufweisen.

14. Mehrkammerwärmespeicher nach einem der vorangehenden Ansprüche, **dadurch gekennzeichnet, daß**
die Sohle (6) zumindest abschnittsweise im wesentlichen geneigt unter Ausbildung mindestens einer Senke (32), insbesondere im Zentrum der Grubenstruktur (2), ausgeführt ist.

15. Mehrkammerwärmespeicher nach einem der vorangehenden Ansprüche, **gekennzeichnet durch**
mindestens eine über der Abdichtschicht der Sohle zumindest abschnittsweise vorliegende Vlies-, geotextile und/oder mineralische Schutzschicht.

16. Mehrkammerwärmespeicher (1, 1', 1", 1"', 1"") nach einem der vorangehenden Ansprüche, **gekennzeichnet durch**
mindestens ein in der Grubenstruktur (2) benachbart zur Sohle (6) oder auf oder in der Sohle, insbesondere in einer Senke (32), angebrachtes Fluidauslaßrohr (34), insbesondere Drainagerohr.

17. Mehrkammerwarmespeieher nach einem der vorangehenden Ansprüche, **dadurch gekennzeichnet, daß**
jede Zone über mindestens ein Auslaßrohr und/oder über mindestens ein Einlaßrohr verfügt bzw. verfügen.

18. Mehrkammerwärmespeicher (1, 1', 1", 1"', 1"") nach einem der vorangehenden Anspruche, **gekennzeichnet durch**
mindestens eine unterhalb der thermischen Dämmschicht (22) der Abdeckung (20) vorliegende Wasserdampfdiffusionssperrschicht (21), insbesondere ein mit einer Aluminiumfolie kaschiertes Schutzvlies, und/oder mindestens eine oberhalb der Abdichtschicht (24) der Abdeckung (20) vorliegendes Schutzvlies, eine textile Deckendichtung. (co)extrudierte Kunststoffolie, Drainageschicht (36), Bodenschicht (38) und/oder Humusschicht.

19. Mehrkammerwärmespeicher (1, 1', 1", 1"', 1"") nach einem der vorangehenden Ansprüche, **dadurch gekennzeichnet, daß**
die Grubenfüllung (12) im wesentlichen inkompressibles körniges und/oder splittartiges Material, insbesondere mit einer 11/16- und/oder 11/22-Körnung und besonders bevorzugt mit einer 2/5-, 5/8-, 8/11-, 5/11-, 2/8- und/oder 2/11-Körnung, aufweist.

20. Mehrkammerwärmespeicher (1"") nach einem der vorangehenden Ansprüche, **gekennzeichnet durch**
zumindest abschnittsweise benachbart zur Seitenwand (72) vorliegende beabstandete Erdsonden (74).

21. Mehrkammerwärmespeicher (1, 1', 1", 1"', 1"") nach einem der vorangehenden Ansprüche, **dadurch gekennzeichnet, daß**
die Abdeckung (20), insbesondere von deren Mitte, zu den Seitenwänden der GrubenStruktur (2) hin geneigt ist.

22. Mehrkammerwärmespeicher (1") nach einem der vorangehenden Ansprüche, **gekennzeichnet durch**
mindestens eine an oder im Bereich der Außenseite von Sohle (6) und/oder Seitenwand (14) vorliegende Abdichtschicht (52), mindestens eine außerhalb dieser Abdichtschicht (52) im Bereich von Sohle (6) und/oder Seitenwand (14) zumindest bereichsweise vorliegende Sickerschicht (54), insbesondere umfassend eine hohlraumreiche Granulatschicht, und/oder mindestens eine weitere, die Sickerschicht nach unten und/oder zur Seite abgrenzende Abdichtschicht (56).

23. Mehrkammerwärmespeicher (1") nach Anspruch 22, **dadurch gekennzeichnet, daß**
die Sickerschicht (54) in Wirkverbindung mit der Drainageschicht (36) der Abdeckung (20) steht und/oder mindestens eine Entnahmeleictung (58) aufweist.

24. Mehrkammerwärmespeicher (1"') nach einem der vorangehenden Ansprüche, **gekennzeichnet durch**
eine im wesentlichen flüssigkeitsdichte Wannenkonstruktion und/oder Membranwanne (62), die die Grubenstruktur (2) umgibt, um Grundwasser von dieser fernzuhalten, wobei die Wannenkonstruktion und/oder die zwischen Sohle (6) und/oder Seitenwand (14) der Grubenstruktur (2) und der Innenwand der Wannenkonstruktion und/oder der Membranwanne (62) vorliegende Schüttung (64) Ballastmaterial, insbesondere grobkörnige Elektrootenschlacke, umfaßt, um die Wannenkonstruktion und/oder die Membranwanne (62) gegen Auftrieb zu sichern.

25. Mehrkammerwärmespeicher (1"') nach Anspruch 24, **gekennzeichnet durch**
eine sich zumindest bereichsweise an die Außenwand der Wannenkonstruktion (60) anschließende grobkörnige Bodenschicht (70) und mindestens ein, diese Schicht umgebenden Schutzvlies und/oder -gewebe (71).

26. Mehrkammerwärmespeicher nach einem der vorangehenden Ansprüche, **gekennzeichnet durch**
mindestens eine Betriebs- und/oder Steuereinheit, enthaltend mindestens eine Umwätzpumpe, einen Wärmetauscher und/oder eine Zu- und Ablauf-, insbesondere ein Ventil- und/oder Sprührohrsteuerung.

27. Mehrkammerwärmespeicher (100) nach einem der vorangehenden Ansprüche, **kennzeichnet durch**
mindestens einen zumindest bereichsweise auf der Abdeckung (20) und/oder, insbesondere im Erdreich, oberhalb der Abdeckung (20) vorliegenden Teich (90).

28. Mehrkammerwärmespeicher (100) nach Anspruch 27, **dadurch gekennzeichnet, daß** der Teich (90) mindestens einen lageveränderbaren, insbesondere um eine Achse, einen Ankerzapfen und/oder einen Achszapfen (96) dreh- und/oder schwenkbaren, Schwimmponton (92) enthaltend mindestens einen, insbesondere dreh- und/oder schwenkbaren, Sonnenkollektor (94), insbesondere Paraholrinnen-, Vakuumflach- oder Vakuumröhrenkollerktor, umfaßt.

29. Mehrkammerwärmespeicher (100) nach Anspruch 28, **dadurch gekennzeichnet, daß** der Schwimmponton (92) und/oder der Sonnenkollektor (94) in der Weise drehbar ist bzw. sind, daß das einfallende Sonnenlicht maximal nutzbar ist.

30. Mehrkammerwärmespeicher (100) nach Anspruch 28 oder 29, **dadurch gekennzeichnet, daß** die über die Sonnenkottektoren (94) gewinnbare Wärmeenergie und/oder die in den Sonnenkollektoren (96) aufgewärmte Flüssigkeit, insbesondere Wasser, zur Erwärmung mindestens einer Zone (28) des Mehrkammerwärmespeichers einsetzbar ist.

31. Mehrkammerwärmespeicher (100) nach einem der Ansprüche 28 bis 31, **dadurch gekennzeichnet, daß** mindestens ein Motor, eine Steuerung zum Drehen des oder der Schwimmpontons (92) und/oder von Sonnenkollektoren (94), und/oder mindestens ein Teil der Betriebs- und/oder Steuereinheit im und/oder unter dem Schwimmponton (92) angebracht ist.

32. Mehrkmmerwärmespeicher nach einem der vorangehenden Ansprüche, **dadurch gekennzeichnet, daß**
die Abdichtschicht (10, 18, 24, 48) und/oder die Trennwand (26) eine Polyethylen-, insbesondere eine biaxiale LD-Polyethylen-, Polyester-, Polyurethan-, Polyamid-, syndiotaktisches Polystyrol- und/oder Polyethylenterephthalatfolic und/oder ein mit Polyurethansehaum ummanteltes Glasvlies umfaßt.

33. Verfahren zur Einbringung und Entnahme von Wärmeenergie in einen bzw. aus einem Mehrkammerwärmespeicher gemäß einem der Ansprüche 1 bis 32, **dadurch gekennzeichnet, daß**
man das Wärmetransportmedium, insbesondere Wasser, in fein verteilter Form auf und/oder in die Grubenfüllung auf- bzw. einbringt, insbesondere auf und/oder in die Grubenfüllung sprüht.

34. Verwendung der Mehrkanmmerwärmespeicher gemäß einem der Ansprüche 1 bis 32 zur Speicherung von Wärmeenergie aus Solaranlagen, Müllverbrennungsanlagen und/oder Industrieanlagen.

## Claims

1. A multi-chamber heat storage unit for storing heat energy, comprising a pit structure which in particular is set into the ground, comprising a base, a circumferential side wall and a cover, wherein at least part of the pit structure contains a solid pit filling, **characterized in that** the pit filling (12) is divided into zones (28, 42, 44, 46, 78) by at least two partition walls (26) and/or at least one circumferential partition wall (26) and **in that** the base (6) comprises at least one thermally insulating layer (8) and at least one sealing layer (10), in particular applied over the insulating layer (8), in particular an essentially watertight, flexible plastic sealing film, and **in that** the circumferential side wall (14) comprises at least one thermally insulating layer (16) and/or at least one, in particular inwardly lying, sealing layer (18), and **in that** the cover (20) of the pit structure (2) comprises at least one thermally insulating layer (22) and at least one sealing layer (24) that is provided over the insulating layer (22), and wherein the multi-chamber heat storage unit has at least one inlet pipe (40) in, below or adjacent to the cover (20), containing a spray pipe or at least one spray nozzle.

2. A multi-chamber heat storage unit (1, 1', 1", 1"', 1"") according to claim 1, **characterized by** an essentially enveloping circumferential thermally insulating layer (8, 16,22) and/or an essentially enveloping circumferential sealing layer (10, 18, 24).

3. A multi-chamber heat storage unit (1, 1', 1", 1"', 1"") according to claim 1 or claim 2, **characterized in that** the thermally insulating layer (16, 22) of the side wall (14) and/or cover (22) comprises at least one ply of expanded, in particular adjacent, bodies, in particular large format and/or closed pore, rigid foam blocks.

4. A multi-chamber heat storage unit (1, 1', 1", 1"', 1"") according to one of the preceding claims, **characterized in that** the thermally insulating layer (8) of the base (6) comprises at least one ply of expanded, in particular adjacent, bodies, in particular large format and/or closed pore, rigid foam blocks, and/or at least one layer of mineral insulating materials, in particular foamed glass, expanded clay and/or expanded shale.

5. A multi-chamber heat storage unit (1, 1', 1", 1"', 1"") according to one of the preceding claims, **characterized in that** the pit filling (12) has a plurality of partition walls (26) which are arranged adjacently, in particular essentially parallel, and/or intersect and/or are in the form of one or more circumferential, in particular centred, partition walls (26).

6. A multi-chamber heat storage unit (1, 1', 1", 1"', 1"") according to one of the preceding claims, **characterized in that** the partition wall (26) or partition walls (26) is/are inclined and/or at least in sections is/are essentially vertically orientated and essentially extend(s) from the cover (20), in particular forming thereby an essentially fluid-tight connection therewith, to the base (6).

7. A multi-chamber heat storage unit (1, 1', 1", 1"', 1"") according to one of the preceding claims, **characterized in that** the partition wall (26), in particular in the region of the base (6), has at least one through opening (30).

8. A multi-chamber heat storage unit (1, 1', 1", 1"', 1"") according to one of the preceding claims, **characterized in that** at least one partition wall (26) and/or a sealing layer (48), in particular adjacent to the partition wall, is connected at least in regions with the base (6), in particular in a fluid-tight manner, forming self-contained zones (28) thereby.

9. A multi-chamber heat storage unit (1, 1', 1", 1"', 1"") according to claim 8, **characterized in that** at least one partition wall(26) and/or a sealing layer (48), in particular adjacent to the partition wall, divides the pit structure (2) into fluid-tight and/or thermally insulated zones between which essentially no free exchange of fluid and/or heat energy takes place.

10. A multi-chamber heat storage unit (1, 1', 1", 1"', 1"") according to one of the preceding claims, **characterized in that** the partition wall (26) comprises a wall formed from stone, concrete, metal and/or plastic, in particular from a pressure-resistant and/or high temperature-resistant plastic and/or a plastic film.

11. A multi-chamber heat storage unit (1, 1', 1", 1"', 1"") according to one of the preceding claims, **characterized in that** at least one partition wall and/or inner sealing layer (76) is essentially horizontally arranged at least in regions, in particular to provide for division of the pit filling in an upper and a lower Zone.

12. A multi-chamber heat storage unit (1"") according to claim 11, **characterized in that** the inner sealing layer (76) is connected to the side wall seal (72) in a fluid-tight manner or is run up the side wall(72) closely thereto at least in sections.

13. A multi-chamber heat storage unit (1 "") according to claim 11 or claim 12, **characterized in that** the zone (78) or zones below the inner sealing layer (76) has at least one fluid inlet pipe (80) adjacent to the underside of the inner sealing layer (76), in particular a spray pipe and/or containing a spray nozzle, and/or has at least one fluid outlet pipe (82), in particular on, in or adjacent to the base (6).

14. A multi-chamber heat storage unit according to one of the preceding claims, **characterized in that** the base (6) is constructed at least in sections so as to be essentially inclined, forming thereby at least one drain (32), in particular in the centre of the pit structure (2).

15. A multi-chamber heat storage unit according to one of the preceding claims, **characterized by** at least one fleece, geotextile and/or mineral protective layer provided at least in sections over the sealing layer of the base.

16. A multi-chamber heat storage unit (1, 1', 1", 1"', 1"") according to one of the preceding claims, **characterized by** at least one fluid outlet pipe (34), in particular a drainage pipe, provided in the pit structure (2) adjacent to the base (6) or on or in the base, in particular in a drain (32).

17. A multi-chamber heat storage unit according to one of the preceding claims, **characterized in that** each zone has at least one outlet pipe and/or at least one inlet pipe.

18. A multi-chamber heat storage unit (1, 1', 1", 1"', 1"") according to one of the preceding claims, **characterized by** at least one water vapour diffusion barrier layer (21) provided below the thermally insulating layer (22) of the cover (20), in particular a protective fleece laminated with an aluminium foil, and/or at least one protective fleece, a textile cover seal, (co)extruded plastic film, drainage layer (36), ground layer (38) and/or layer of humus provided over the sealing layer (24) of the cover (20).

19. A multi-chamber heat storage unit (1, 1', 1", 1"', 1"") according to one of the preceding claims, **characterized in that** the pit filling (12) has essentially incompressible grainy and/or chipping-like material, in particular with a 11/16 and/or 11/22 grain size and particularly preferably with a 2/5, 5/8, 8/11,5/11, 2/8 and/or 2/11 grain size.

20. A multi-chamber heat storage unit (1"") according to one of the preceding claims, **characterized by** spaced out soil Sensors (74) provided adjacent to at least sections of the side wall (72).

21. A multi-chamber heat storage unit (1, 1', 1", 1"', 1"") according to one of the preceding claims, **characterized in that** the cover (20), in particular from the centre thereof, is inclined towards the side walls of the pit structure (2).

22. A multi-chamber heat storage unit (1") according to one of the preceding claims, **characterized by** at least one sealing layer (52) provided at or in the region of the outer side of the base (6) and/or side wall (14), at least one soakaway layer (54) provided at least in regions outside said sealing layer (52) in the region of the base (6) and/or side wall(14), in particular comprising a high-void granulate layer, and/or at least one further sealing layer (56) bordering the bottom and/or side of the soakaway layer.

23. A multi-chamber heat storage unit (1") according to claim 22, **characterized in that** the soakaway layer (54) is operationally connected with the drainage layer (36) of the cover (20) and/or has at least one bleed line (58).

24. A multi-chamber heat storage unit (1"') according to one of the preceding claims, **characterized by** an essentially liquid-tight basin construction and/or membrane basin (62) which surrounds the pit structure (2) in order to keep ground water away therefrom, wherein the basin construction and/or the fill (64) provided between the base (6) and/or side wall (14) of the pit structure (2) and the inner wall of the basin construction and/or the membrane basin (62) comprises ballast material, in particular coarse-grained electroslag, in order to ensure that the basin construction and/or the membrane basin (62) does not lift.

25. A multi-chamber heat storage unit (1"') according to claim 24, **characterized by** a coarse-grained ground layer (70) adjacent to the outer wall of the basin construction (60) at least in regions and at least one protective fleece and/or fabric (71) surrounding said layer.

26. A multi-chamber heat storage unit according to one of the preceding claims, **characterized by** at least one operating and/or control unit, containing at least one circulating pump, a heat exchanger and/or a control for an inlet and outlet, in particular a valve and/or Spray pipe control.

27. A multi-chamber heat storage unit (100) according to one of the preceding claims, **characterized by** at least one pond (90) provided at least in regions on the cover (20) and/or over the cover (20), in particular in the ground.

28. A multi-chamber heat storage unit (100) according to claim 27, **characterized in that** the pond (90) comprises at least one floating pontoon (92) that is displaceable, in particular rotatable and/or pivotable about an axis, a king pin and/or a spindle (96), containing at least one solar collector (94), which in particular is rotatable and/or pivotable, in particular a parabolic trough collector, flat-plate vacuum collector or vacuum tube collector.

29. A multi-chamber heat storage unit (100) according to claim 28, **characterized in that** the floating pontoon (92) and/or the solar collector (94) is or are rotatable in such a manner that incident sunlight is utilized to its maximum.

30. A multi-chamber heat storage unit (100) according to claim 28 or claim 29, **characterized in that** the heat energy obtainable via the solar collectors (94) and/or the liquid, in particular water, which is heated up in the solar collectors (96), can be used to heat at least one Zone (28) of the multi-chamber heat storage unit.

31. A multi-chamber heat storage unit (100) according to one of claims 28 to 3 1, **characterized in that** at least one motor, a control to rotate the floating pontoon or pontoons (92) and/or the solar collectors (94) and/or at least a part of the operating and/or control unit is provided in and/or under the floating pontoon (92).

32. A multi-chamber heat storage unit according to one of the preceding claims, **characterized in that** the sealing layer (10, 18, 24, 48) and/or the partition wall (26) comprises a polyethylene, in particular a biaxial LD polyethylene, polyester, polyurethane, polyamide, syndiotactic polystyrene and/or polyethylene terephthalate film and/or a glass fleece coated with polyurethane foam.

33. A method for introducing and removing heat energy into or out of a multi-chamber heat storage unit in accordance with one of claims 1 to 32, **characterized in that** the heat transport medium, in particular water, is introduced onto and/or into the pit filling in a finely divided form, in particular by spraying onto and/or into the pit filling.

34. Use of the multi-chamber heat storage unit according to one of claims 1 to 32 to store heat energy from solar plants, waste incineration plants and/or industrial plants.

## Revendications

1. Accumulateur thermique à chambres multiples destiné à accumuler de l'énergie thermique, comprenant une structure formant fosse, en particulier encastrée dans le sol, comprenant une sole, une paroi latérale périphérique et une couverture, la structure formant fosse contenant au moins partiellement un remplissage de fosse en matières solides, **caractérisé en ce que**
le remplissage de fosse (12) est divisé en zones (28, 42, 44, 46, 78) grâce à au moins deux cloisons (26) et/ou au moins une cloison périphérique (26), et la sole (6) comprend au moins une couche d'isolation thermique (8) et au moins une couche d'étanchéité (10) installée en particulier au-dessus de la couche d'isolation (8), en particulier une feuille d'étanchéité en matière plastique flexible essentiellement étanche à l'eau, et
la paroi latérale périphérique (14) comprend au moins une couche d'isolation thermique (16) et/ou au moins une couche d'étanchéité (18), en particulier située à l'intérieur, et
la couverture (20) de la structure formant fosse (2) comprend au moins une couche d'isolation thermique (22) et au moins une couche d'étanchéité (24) présente au-dessus de la couche d'isolation (22), et l'accumulateur thermique à chambres multiples présentant au moins un tube d'admission (40) installé en dessous ou au voisinage de la couverture (20), contenant un tube de pulvérisation ou au moins une buse de pulvérisation.

2. Accumulateur thermique à chambres multiples (1, 1', 1", 1"', 1"") selon la revendication 1, **caractérisé par**
une couche d'isolation thermique (8, 16, 22) entourant essentiellement tous les côtés et/ou une couche d'étanchéité (10, 18, 24) entourant essentiellement tous les côtés.

3. Accumulateur thermique à chambres multiples (1, 1', 1", 1"', 1"") selon la revendication 1 ou 2, **caractérisé en ce que**
la couche d'isolation thermique (16, 22) de la paroi latérale (14) et/ou de la couverture (22) comprend au moins une strate constituée de corps en mousse, en particulier adjacents, en particulier de blocs de mousse dure de grand format et/ou à cellules fermées.

4. Accumulateur thermique à chambres multiples (1, 1', 1", 1"', 1"") selon l'une quelconque des revendications précédentes, **caractérisé en ce que**
la couche d'isolation thermique (8) de la sole (6) comprend une strate constituée de corps en mousse, en particulier adjacents, en particulier de blocs de mousse dure de grand format et/ou à cellules fermées, et/ou au moins une couche constituée de matières d'isolation minérales, en particulier de la mousse de verre, de l'argile expansé et/ou du schiste expansé.

5. Accumulateur thermique à chambres multiples (1, 1', 1", 1"', 1"") selon l'une quelconque des revendications précédentes, **caractérisé en ce que**
le remplissage de fosse (12) présente plusieurs cloisons (26) agencées les unes à côté des autres, en particulier selon un tracé essentiellement parallèle, et/ou se croisant et/ou une ou plusieurs cloisons (26) périphériques, en particulier installées de manière centrale.

6. Accumulateur thermique à chambres multiples (1, 1', 1", 1"', 1"") selon l'une quelconque des revendications précédentes, **caractérisé en ce que**
la cloison (26) ou les cloisons (26) sont orientées de manière inclinée et/ou essentiellement verticale au moins par section et s'étendent essentiellement depuis la couverture (20), en particulier avec formation d'une liaison essentiellement étanche aux liquides au niveau de celle-ci, jusqu'à la sole (6).

7. Accumulateur thermique à chambres multiples (1, 1', 1", 1"', 1"") selon l'une quelconque des revendications précédentes, **caractérisé en ce que**
la cloison (26) présente, en particulier dans le secteur de la sole (6), au moins une ouverture traversante (30).

8. Accumulateur thermique à chambres multiples (1, 1', 1", 1"', 1"") selon l'une quelconque des revendications précédentes, **caractérisé en ce que**
au moins une cloison (26) et/ou un couche d'étanchéité (48), en particulier adjacente à la cloison, est reliée au moins localement avec la sole (6), en particulier de manière étanche aux liquides, avec formation de zones fermées (28).

9. Accumulateur thermique à chambres multiples (1, 1', 1", 1"', 1"") selon la revendication 8, **caractérisé en ce que**
au moins une cloison (26) et/ou une couche d'étanchéité (48), en particulier adjacente à la cloison, divise la structure formant fosse (2) en zones étanches aux liquides et/ou thermiquement isolées, entre lesquelles n'a lieu essentiellement aucun échange libre de liquide et/ou d'énergie thermique.

10. Accumulateur thermique à chambres multiples (1, 1', 1 ", 1"', 1 "") selon l'une quelconque des revendications précédentes, **caractérisé en ce que**
la cloison (26) comprend une paroi de pierre, de béton, de métal et/ou de matière plastique, en particulier une matière plastique résistante à la pression et/ou résistante aux températures élevées et/ou une feuille de matière plastique.

11. Accumulateur thermique à chambres multiples (1, 1', 1", 1"', 1"") selon l'une quelconque des revendications précédentes, **caractérisé en ce que**
au moins une cloison et/ou une couche d'étanchéité intérieure (76) est agencée au moins localement, essentiellement de manière horizontale, en particulier avec un partage du remplissage de fosse en une zone supérieure et une zone inférieure.

12. Accumulateur thermique à chambres multiples (1"") selon la revendication 11, **caractérisé en ce que**
la couche d'étanchéité intérieure (76) est reliée de manière étanche aux liquides avec le joint d'étanchéité (72) de paroi latérale, ou la cloison latérale (72) est en haut au moins par section de manière adjacente à ce joint.

13. Accumulateur thermique à chambres multiples (1"") selon la revendication 11 ou 12, **caractérisé en ce que**
la zone (78), ou des zones, présente(s) en dessous de la couche d'étanchéité intérieure (76), dispose ou disposent au moins un tube d'admission de liquide (80) adjacent à la face inférieure de la couche d'étanchéité intérieure (76), en particulier un tube de pulvérisation et/ou contenant une buse de pulvérisation, et/ou d'au moins un tube de sortie de liquide (82), en particulier sur, dans ou adjacent à la sole (6).

14. Accumulateur thermique à chambres multiples selon l'une quelconque des revendications précédentes, **caractérisé en ce que**
la sole (6) est réalisée au moins par section de manière essentiellement inclinée avec formation d'au moins une dépression (32), en particulier au centre de la structure formant fosse (2).

15. Accumulateur thermique à chambres multiples selon l'une quelconque des revendications précédentes, **caractérisé par**
au moins une couche de protection en intissé, en géotextile et/ou minérale, présente au moins par section sur la couche d'étanchéité de la sole.

16. Accumulateur thermique à chambres multiples (1, 1', 1", 1"', 1"") selon l'une quelconque des revendications précédentes, **caractérisé par**
au moins un tube de sortie de liquide (34), en particulier un tube de drainage, installé dans la structure formant fosse (2) de manière adjacente à la sole (6) ou sur ou dans la sole, en particulier dans une dépression (32).

17. Accumulateur thermique à chambres multiples selon l'une quelconque des revendications précédentes, **caractérisé en ce que**
chaque zone dispose d'au moins un tube de sortie et/ou d'au moins un tube d'admission.

18. Accumulateur thermique à chambres multiples (1, 1', 1", 1"', 1"") selon l'une quelconque des revendications précédentes, **caractérisé par**
au moins une couche de barrage (21) contre la diffusion de vapeur d'eau présente en dessous de la couche d'isolation thermique (22) de la couverture (20), en particulier un intissé de protection masqué par une feuille d'aluminium, et/ou au moins un intissé de protection présent au-dessus de la couche d'étanchéité (24) de la couverture (20), une chape supérieure textile d'étanchéité, une feuille de matière plastique (co)extrudée, une couche de drainage (36), une couche de sol (38) et/ou une couche d'humus.

19. Accumulateur thermique à chambres multiples (1, 1', 1", 1"', 1"") selon l'une quelconque des revendications précédentes, **caractérisé en ce que**
le remplissage de fosse (2) présente un matériau granulaire et/ou de type gravillon essentiellement incompressible, en particulier d'une composition granulométrique 11/16 et/ou 11/22 et de manière particulièrement préférée d'une composition granulométrique 2/5, 5/8, 8/11, 5/11, 2/8 et/ou 2/11.

20. Accumulateur thermique à chambres multiples (1, 1', 1 ", 1"', 1"") selon l'une quelconque des revendications précédentes, **caractérisé par**
des sondes géothermiques (74) espacées présentes au moins par section de manière adjacente à la paroi latérale (72).

21. Accumulateur thermique à chambres multiples (1, 1', 1", 1"', 1"") selon l'une quelconque des revendications précédentes, **caractérisé en ce que**
la couverture (20) est inclinée, en particulier à partir de son milieu, vers les parois latérales de la structure formant fosse (2).

22. Accumulateur thermique à chambres multiples (1") selon l'une quelconque des revendications précédentes, **caractérisé par**
au moins une couche d'étanchéité (52) présente au niveau de ou dans le secteur de la face extérieure de la sole (6) et/ou de la paroi latérale (14), au moins une couche d'infiltration (54) présente au moins localement à l'extérieur de cette couche d'étanchéité (52) dans le secteur de la sole (6) et/ou de la paroi latérale (14), comprenant en particulier une couche de granulés à faible densité, et/ou au moins une autre couche d'étanchéité (56) délimitant la couche d'infiltration vers le bas et/ou vers les côtés.

23. Accumulateur thermique à chambres multiples (1") selon la revendication 22, **caractérisé en ce que**
la couche d'infiltration (54) est en liaison fonctionnelle avec la couche de drainage (36) de la couverture (20) et/ou présente au moins une conduite de captage (58).

24. Accumulateur thermique à chambres multiples (1"') selon l'une quelconque des revendications précédentes, **caractérisé par**
une construction formant bassin et/ou un bassin à membrane (62) essentiellement étanche aux liquides, qui entoure la structure formant fosse (2), pour maintenir l'eau souterraine à distance de celle-ci, où la construction formant bassin et/ou le remblai (64) présent entre la sole (6) et/ou la paroi latérale (14) de la structure formant fosse (2) et la paroi intérieure de la construction formant bassin et/ou du bassin à membrane (62) comprend un matériau de ballast, en particulier du laitier de four électrique à gros grains, pour prémunir la construction formant bassin et/ou le bassin à membrane (62) contre une poussée verticale.

25. Accumulateur thermique à chambres multiples (1"') selon la revendication 24, **caractérisé par**
une couche de sol (70) à gros grains se raccordant au moins localement au niveau de la paroi extérieure de la construction formant bassin (60) et au moins un intissé et/ou un tissu de protection (71) entourant cette couche.

26. Accumulateur thermique à chambres multiples selon l'une quelconque des revendications précédentes, **caractérisé par**
au moins une unité d'exploitation et/ou de commande, contenant au moins une pompe de circulation, un échangeur de chaleur et/ou une commande d'arrivée et d'écoulement, en particulier une commande de vanne et/ou de tube de pulvérisation.

27. Accumulateur thermique à chambres multiples (100) selon l'une quelconque des revendications précédentes, **caractérisé par**
au moins un étang (90) présent au moins localement sur la couverture (20) et/ou au-dessus de la couverture (20), en particulier dans un terrain.

28. Accumulateur thermique à chambres multiples (100) selon la revendication 27, **caractérisé en ce que**
l'étang (90) comprend au moins un ponton flottant (92) dont l'emplacement peut être modifié, en particulier rotatif et/ou pivotable autour d'un axe, d'un pivot d'ancrage et/ou d'un pivot d'axe (96), contenant au moins un collecteur solaire (94), en particulier rotatif et/ou pivotable, en particulier un collecteur parabolique, plat sous vide ou à tubes sous vide.

29. Accumulateur thermique à chambres multiples (100) selon la revendication 28, **caractérisé en ce que**
le ponton flottant (92) et/ou le collecteur solaire (94) est/sont rotatif(s) de manière à ce que la lumière incidente du soleil puisse être utilisée au maximum.

30. Accumulateur thermique à chambres multiples (100) selon la revendication 28 ou 29, **caractérisé en ce que**
l'énergie thermique pouvant être obtenue par l'intermédiaire des collecteurs solaires (94) et/ou le liquide chauffé dans les collecteurs solaires (96), en particulier de l'eau, peuvent être utilisés pour le chauffage d'au moins une zone (28) de l'accumulateur thermique à chambres multiples.

31. Accumulateur thermique à chambres multiples (100) selon l'une quelconque des revendications 28 à 31, **caractérisé en ce que**
au moins un moteur, une commande pour la rotation du ou des pontons flottants (92) et/ou de collecteurs solaires (94), et/ou d'au moins une partie de l'unité d'exploitation et/ou de commande est installé(e) dans et/ou sous le ponton flottant (92).

32. Accumulateur thermique à chambres multiples selon l'une quelconque des revendications précédentes, **caractérisé en ce que**
la couche d'étanchéité (10, 18, 24, 48) et/ou la cloison (26) comprend une feuille de polyéthylène, en particulier une feuille biaxiale de polyéthylène basse densité, de polyester, de polyuréthanne, de polyamide, de polystyrène syndiotactique et/ou de polyéthylènetéréphtalate et/ou un intissé de verre enrobé de mousse polyuréthanne.

33. Procédé de récupération et de prélèvement d'énergie thermique dans un ou à partir d'un accumulateur thermique à chambres multiples selon l'une quelconque des revendications 1 à 32, **caractérisé en ce que**
le milieu de transport de chaleur, en particulier l'eau, est introduit ou apporté sous une forme finement dispersée sur et/ou dans le remplissage de fosse, en particulier est pulvérisé sur et/ou dans le remplissage de fosse.

34. Utilisation de l'accumulateur thermique à chambres multiples selon l'une quelconque des revendications 1 à 32 pour l'accumulation d'énergie thermique en provenance d'installations solaires, d'installations d'incinération d'ordures et/ou d'installations industrielles.
